(19) Europäisches Patentamt
European Patent Office
Office européen des brevets

(11) EP 4 378 998 A1

(12) EUROPEAN PATENT APPLICATION
published in accordance with Art. 153(4) EPC

(43) Date of publication:
**05.06.2024 Bulletin 2024/23**

(21) Application number: **22849501.6**

(22) Date of filing: **26.07.2022**

(51) International Patent Classification (IPC):
***C08L 29/04*** (2006.01) ***C08F 214/18*** (2006.01)
***C08J 5/04*** (2006.01) ***C08L 27/12*** (2006.01)
***C08L 77/00*** (2006.01) ***F16J 12/00*** (2006.01)
***F16L 11/04*** (2006.01) ***F17C 1/16*** (2006.01)
***F17C 13/00*** (2006.01)

(52) Cooperative Patent Classification (CPC):
**C08F 214/18; C08J 5/04; C08L 27/12; C08L 29/04; C08L 77/00; F16J 12/00; F16L 11/04; F17C 1/16; F17C 13/00;** Y02E 60/32

(86) International application number:
**PCT/JP2022/028812**

(87) International publication number:
**WO 2023/008440 (02.02.2023 Gazette 2023/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.07.2021 JP 2021124230**

(71) Applicant: **AGC INC.**
**Chiyoda-ku,**
**Tokyo 1008405 (JP)**

(72) Inventors:
- **NISHI Eiichi**
  **Tokyo 100-8405 (JP)**
- **SASAKI Toru**
  **Tokyo 100-8405 (JP)**
- **TOKUMITSU Katsuhisa**
  **Hikone-shi, Shiga 522-8533 (JP)**

(74) Representative: **Müller-Boré & Partner Patentanwälte PartG mbB**
**Friedenheimer Brücke 21**
**80639 München (DE)**

# (54) POLYMER ALLOY, HOSE FOR HIGH-PRESSURE GAS, AND STORAGE CONTAINER FOR HIGH-PRESSURE GAS

(57) To provide a polymer alloy excellent in resistance to a high-pressure gas.

A polymer alloy, having a fluorinated copolymer having a carbonyl group-containing group, having a melting point of 250°C or lower, and at least one thermoplastic polymer selected from the group consisting of a polyamide and an ethylene/vinyl alcohol copolymer, immiscible with the fluorinated copolymer and having a melting point of 250°C or lower, melt-kneaded,
wherein the proportion of the fluorinated copolymer to the total mass of the polymer alloy is from 10 to 40 mass%, and
particles of the fluorinated copolymer are dispersed in the thermoplastic polymer, and the average particle size of the fluorinated copolymer particles in the polymer alloy is from 0.001 to 10 μm.

EP 4 378 998 A1

## Description

### TECHNICAL FIELD

The present invention relates to a polymer alloy, a high-pressure gas hose and a high-pressure gas storage container.

### BACKGROUND ART

As a hydrogen gas supply hose for supplying a hydrogen gas to a fuel cell in e.g. a hydrogen gas station, heretofore, metal pipes made of e.g. SUS316L have been mainly used. However, metal pipes have such problems that they are not flexible and thus difficult to handle, SUS316L is very expensive, and other metals may undergo hydrogen embrittlement. Accordingly, in recent years, development of rubber-made and resin-made hoses is in progress. As rubber-made and resin-made hoses, for preventing hydrogen gas leakage and securing durability, multi-layered hoses having a gas barrier layer, a reinforcing layer, etc. laminated have been known.

As the gas barrier layer, for example, an ethylene/vinyl alcohol copolymer (hereinafter sometimes referred to as EVOH) layer has been used.

Patent Document 1 proposes a gas supply hose comprising an inner layer formed of a water resistant resin, a barrier layer formed of EVOH and an outer layer formed of a thermoplastic resin. Patent Document 2 proposes a gas supply hose comprising an inner layer formed of a thermoplastic resin, a barrier layer formed of EVOH and an outer layer formed of an insulating rubber. Patent Documents 1 and 2 further propose a reinforcing layer formed of a net or a spiral layer of organic fibers or metal wires.

Patent Document 3 proposes, as a gas transportation tube for hydrogen, oxygen, carbon dioxide, etc., a tube comprising an inner layer formed of a fluoropolymer (such as ethylene/tetrafluoroethylene or polyvinylidene fluoride), an interlayer formed of EVOH and an outer layer formed of a polyamide. Patent Document 3 also proposes to provide an adhesive layer using a modified polyamide for bonding the interlayer and the inner layer and for bonding the interlayer and the outer layer.

Patent Document 4 proposes a high-pressure hose for liquefied propane gas supply equipment, comprising a reinforcing layer between an outer rubber layer and an inner rubber layer, wherein the reinforcing layer is formed of a spiral layer of organic fibers or metal wires, and a barrier layer formed of a polyamide is formed on the inner side of the inner rubber layer.

For hydrogen gas fuel storage containers also, metal materials have been used, and in recent years, resin liner materials are used for weight saving.

Patent Document 5 proposes use of a polymer composition comprising from 80 to 40 wt% of an ethylene/vinyl acetate copolymer saponified product, and from 20 to 60 wt% of an acid-modified ethylene/$\alpha$-olefin copolymer rubber and/or an acid-modified thermoplastic elastomer, as a liner for a hydrogen gas storage container.

### PRIOR ART DOCUMENTS

### PATENT DOCUMENTS

Patent Document 1: JP-A-2007-15279
Patent Document 2: JP-A-2009-19717
Patent Document 3: JP-A-2006-168358
Patent Document 4: JP-A-2007-218338
Patent Document 5: JP-A-2005-68300

### DISCLOSURE OF INVENTION

### TECHNICAL PROBLEM

In recent years, hydrogen gas storage containers used for supplying a hydrogen gas to a vehicle fuel cell are downsized. A hose for supplying a hydrogen gas to such a downsized hydrogen gas storage container is required to supply a hydrogen gas in an amount sufficient for mileage comparable to current gasoline-powered automobiles to the hydrogen gas storage container quickly in one time.

However, according to studies by the present inventors, a polyamide and EVOH do not have sufficient resistance

to a high-pressure gas (for example a gas of 35 to 90 MPa). For example, a high-pressure gas supply hose having a gas barrier layer formed of a polyamide or EVOH, may have such problems that when the high pressure in the hose is returned to normal pressure (at the time of depressurization), the gas dissolved in the gas barrier layer expands, and swelling (blister) or cracks may occur accompanying internal fracture, and gas barrier property may deteriorate. Particularly in the case of hydrogen gas, since hydrogen gas a smaller molecular size than other gases such as oxygen and carbon dioxide, it is likely to be dissolve in/infiltrate into the resin, and is highly likely to cause the above problems.

The present invention provides a polymer alloy excellent in resistance to a high-pressure gas, and a high-pressure gas hose and a high-pressure gas storage container, using it.

SOLUTION TO PROBLEM

The present invention provides the following.

[1] A polymer alloy, having a fluorinated copolymer having a carbonyl group-containing group, having a melting point of 250°C or lower, and at least one thermoplastic polymer selected from the group consisting of a polyamide and an ethylene/vinyl alcohol copolymer, immiscible with the fluorinated copolymer and having a melting point of 250°C or lower, melt-kneaded,

wherein the proportion of the fluorinated copolymer to the total mass of the polymer alloy is from 10 to 40 mass%, and
particles of the fluorinated copolymer are dispersed in the thermoplastic polymer, and the average particle size of the fluorinated copolymer particles in the polymer alloy is from 0.001 to 10 μm.

[2] The polymer alloy according to [1], wherein the following strain hardening degree is from 0.10 to 1.50:

strain hardening degree: the uniaxial elongation viscosity is measured at a temperature of 240°C at a strain rate $\varepsilon^{\bullet}$ of 1.0 $s^{-1}$, and the strain hardening degree SH is obtained in accordance with the following formulae (1) to (3):

$$SH = d\ln\lambda_n(t)/d\varepsilon(t) \qquad (1)$$

$$\lambda_n(t) = \eta_E^{+}(t)/3\eta(t) \qquad (2)$$

$$\varepsilon(t) = \varepsilon^{\bullet} \bullet t \qquad (3)$$

wherein SH is the strain hardening degree, In is the natural logarithm, $\lambda_n(t)$ is the nonlinear parameter, $\eta_E^{+}(t)$ is the elongation viscosity in the nonlinear region, $\eta(t)$ is the linear elongation viscosity obtained by converting the absolute value of the complex viscosity obtained as a function of $\omega$ by dynamic shear viscoelasticity measurement at a temperature of 240°C at an angular frequency $\omega$ of from 0.1 to 100 (rad/s), into a function of time with $t=1/\omega$, $\varepsilon(t)$ is Hencky strain, and t is the elongation time.

[3] The polymer alloy according to [1] or [2], wherein the content of the carbonyl group-containing group is from 10 to 60,000 groups per $1\times10^6$ carbon atoms in the main chain of the fluorinated copolymer.
[4] The polymer alloy according to any one of [1] to [3], wherein the carbonyl group-containing group is a group selected from the group consisting of a group having a carbonyl group between carbon atoms of a hydrocarbon group, a carbonate group, a carboxy group, a haloformyl group, an alkoxycarbonyl group and an acid anhydride residue.
[5] The polymer alloy according to any one of [1] to [4], wherein the fluorinated copolymer further has a hydroxy group.
[6] The polymer alloy according to any one of [1] to [5], wherein the fluorinated copolymer has units a1 based on tetrafluoroethylene, units based on ethylene, and units a3 based on a monomer copolymerizable with ethylene and tetrafluoroethylene, having no carbonyl group-containing group,

at least part of the units a3 are units based on $CH_2=CX^1(CF_2)_nX^2$ wherein $X^1$ and $X^2$ are each independently a hydrogen atom or a fluorine atom, and n is an integer of from 2 to 8, and
the total molar amount of the units a1, the units a2 and the units a3 to the total molar amount of all units

constituting the fluorinated copolymer is 90 mol% or more.

[7] The polymer alloy according to [6], wherein the carbonyl group-containing group is an acid anhydride residue, and the fluorinated copolymer has units a4 based on a non-fluorinated monomer having the acid anhydride residue.
[8] The polymer alloy according to any one of [1] to [7], wherein the fluorinated copolymer satisfies that it has a flexural modulus of 1,000 MPa or less, it is not broken in Izod impact test at -40°C, it has a brittle temperature of -80°C or lower, and it shows ductile fracture in three-point bending test at -40°C.
[9] The polymer alloy according to any one of [1] to [8], wherein the thermoplastic polymer has a hydrogen gas permeability coefficient of 1,000 [cc•20 μm/($m^2$•24hs•atm)] or less, and the fluorinated copolymer has a hydrogen gas permeability coefficient of 5,000 [cc•20 μm/($m^2$•24hs•atm)] or more.
[10] The polymer alloy according to any one of [1] to [9], wherein the ethylene/vinyl alcohol copolymer has a hydrogen gas permeability coefficient of 50 [cc•20 μm/($m^2$•24hs•atm)] or less, and the polyamide has a hydrogen gas permeability coefficient of 1000 [cc•20 μm/($m^2$•24hs•atm)] or less.
[11] The polymer alloy according to any one of [1] to [10], which has a water absorption of 2.5% or lower.
[12] The polymer alloy according to any one of [1] to [11], which has a free volume of 0.1 $nm^3$ or less.
[13] The polymer alloy according to any one of [1] to [12], which has the following hydrogen exposure degradation index of 0.5 or less:
hydrogen exposure degradation index: the polymer alloy is formed into a test specimen with a thickness of 2 mm, which is subjected to high-pressure hydrogen gas exposure test of exposing the test specimen to a high-pressure hydrogen gas of 90 MPa for 65 hours repeatedly three times, and the hydrogen exposure degradation index is obtained from the visible light transmission of the test specimen in the thickness direction before and after the high-pressure hydrogen gas exposure test, in accordance with the following formula (4):
hydrogen exposure degradation index=1-(transmission after high-pressure hydrogen gas exposure test/transmission before high-pressure hydrogen gas exposure test) (4)
[14] The polymer alloy according to any one of [1] to [13], wherein the tensile break strength after the fluorinated copolymer is exposed to an atmospheric temperature of 170°C for 500 hours is 70% or higher to the tensile break strength before the exposure.
[15] The polymer alloy according to any one of [1] to [14], wherein the tensile elongation at break after the fluorinated copolymer is exposed to an atmospheric temperature of 170°C for 500 hours is 100% or higher to the tensile elongation at break before the exposure.
[16] The polymer alloy according to any one of [1] to [15], wherein the decomposition half-life temperature for 100,000 hours of the fluorinated copolymer is 135°C or higher.
[17] A high-pressure gas hose, using the polymer alloy as defined in any one of [1] to [16].
[18] A high-pressure gas hose, having a fiber-reinforced resin layer containing the polymer alloy as defined in any one of [1] to [16] and reinforced fibers.
[19] A high-pressure gas storage container, using the polymer alloy as defined in any one of [1] to [16].
[20] A high-pressure gas storage container, having a fiber-reinforced resin layer containing the polymer alloy as defined in any one of [1] to [16] and reinforced fibers.

ADVANTAGEOUS EFFECTS OF INVENTION

According to the present invention, provided are a polymer alloy excellent in resistance to a high-pressure gas, and a high-pressure gas hose and a high-pressure gas storage container, using it.

BRIEF DESCRIPTION OF DRAWINGS

Fig. 1 is a diagram illustrating the relation between the elongation time t and the elongation viscosity $\eta_E^+(t)$ obtained by uniaxial elongation viscosity measurement.
Fig. 2 is a diagram illustrating the relation between Hencky strain $\varepsilon(t)$ and the logarithm of the nonlinear parameter $\lambda_n(t)$.

DESCRIPTION OF EMBODIMENTS

Meanings and definitions of the terms used in the present invention are as follows.
Units based on a monomer generically mean an atomic group directly formed by polymerization of one monomer molecule and an atomic group obtained by chemical conversion of a part of the atomic group after polymerization. In this specification, the units based on a monomer may sometimes be referred to simply as monomer units.

A monomer is a compound having a polymerizable carbon-carbon double bond.

A carbonyl group-containing group is a group having a carbonyl group (-C(=O)-) in its structure.

A linear region is, as illustrated by the solid line in Fig. 1, a region in which the elongation viscosity measured does not depend on the strain rate and shows a constant time dependence.

A nonlinear region is, as illustrated by the broken line in Fig. 1, a region in which the elongation viscosity measured rapidly increases out of the linear region with the elongation time.

Strain hardening is a property that the elongation viscosity measured rapidly increases out of the linear region in a high strain region.

The strain hardening degree SH is a parameter indicating the degree of strain hardening. The strain hardening degree is obtained in accordance with the following formulae (1) to (3) from the uniaxial elongation viscosity measured at a temperature of 240°C under a strain rate $\varepsilon^{\bullet}$ of 1.0 $s^{-1}$:

$$SH = d\ln\lambda_n(t)/d\varepsilon(t) \qquad (1)$$

$$\lambda_n(t) = \eta_E^{+}(t)/3\eta(t) \qquad (2)$$

$$\varepsilon(t) = \varepsilon^{\bullet} \cdot t \qquad (3)$$

wherein SH is the strain hardening degree, In is the natural logarithm, $\lambda_n(t)$ is the linear parameter, $\eta_E^{+}(t)$ is the elongation viscosity in the nonlinear region, $\eta(t)$ is the linear elongation viscosity obtained by converting the absolute value of the complex viscosity obtained as a function of $\omega$ by dynamic shear viscoelasticity measurement at a temperature of 240°C at an angular frequency $\omega$ of from 0.1 to 100 (rad/s), into a function of time with $t=1/\omega$, $\varepsilon(t)$ is Hencky strain, and t is the elongation time.

$3\eta(t)$ is the elongation viscosity (solid line in Fig. 1) in a linear region predicted from dynamic shear viscoelasticity measurement by plotting $t=1/\omega$ on the vertical axis and a value three times $\eta$ on the vertical axis. The nonlinear parameter $\lambda_n(t)$ obtained from the formula (2) is the ratio of the elongation viscosity at each time to the elongation viscosity in a linear region predicted form dynamic shear viscoelasticity measurement.

As shown in Fig. 2, it is known that in a polymer material with strain hardening, with an elongation change (that is with the elongation time t), the logarithm of the nonlinear parameter $\lambda_n(t)$ linearly increases relative to the Hencky strain $\varepsilon(t)$. The formula 1 is a formula to obtain the slope of the straight line, and the larger the slope (that is the strain hardening degree SH), the more significant the strain hardening.

The melting point is a temperature corresponding to a maximum value of the melting peak measured by a differential scanning calorimeter (DSC) at a temperature-increasing rate of 10°C/min.

The average particle size of the fluorinated copolymer in the polymer alloy is obtained as follows. The cross section of the polymer alloy is observed with a scanning electron microscope (SEM) to acquire SEM images, at least 100 domains (dispersed particles) in the acquired SEM images are randomly selected using an image processing software (Image-J software), and a histogram of the domain area of all the selected domains is prepared, to calculated the area average size, which is taken as the average particle size. The number of classes in the histogram is set in accordance with Sturges' rule ($n=1+\log_2 N$, n: number of classes, N: number of data).

The flexural modulus is measured in accordance with ASTM D790. The measurement temperature is 23±2°C.

The Izod impact test is measured in accordance with ASTM D256.

The brittle temperature is the peak temperature of $\gamma$ dispersion obtained from the energy absorption coefficient of the temperature dispersion in dynamic viscoelasticity measurement.

The three-point bending test is conducted in accordance with ASTM D790 at a bending rate of 10 mm/min with a distance between supports of 64 mm at a measurement temperature of -40°C.

The hydrogen gas permeability coefficient is measured in accordance with JIS K7126-1:2006 (Differential-pressure method).

The water absorption is measured in accordance with JIS K7209:2000.

The free volume is calculated by positron annihilation lifetime spectroscopy (PALS).

The hydrogen exposure degradation index is obtained as follows. A sample (for example a polymer alloy) is formed into a test specimen with a thickness of 2 mm, which is subjected to a high-pressure hydrogen gas exposure test of exposing the test specimen to a high-pressure hydrogen gas of 90 MPa for 65 hours repeatedly three times, and from the visible light (wavelength: 380 to 780 nm) transmission of the test specimen in the thickness direction before and after the high-pressure hydrogen gas exposure test, the hydrogen exposure degradation index is obtained in accordance with the following formula (4). The lower the degree of degradation of the test specimen in the high-pressure

hydrogen gas exposure test, the closer to 1 the value of "transmission after high-pressure hydrogen gas exposure test/transmission before high-pressure hydrogen gas exposure test", and the lower the hydrogen exposure degradation index.

$$\text{Hydrogen exposure degradation index}=1-(\text{transmission after high-pressure hydrogen gas exposure test}/\text{transmission before high-pressure hydrogen gas exposure test}) \quad (4)$$

The visible light transmission is obtained as follows. Visible light is applied from a light emitting diode (LED) light source placed on one side of the test sample toward the center of the test specimen, in such a state, an image on the opposite side of the test specimen is acquired by a microscope, and an average brightness within a range from the center of the test specimen to a radius of 5.5 mm is obtained by an image processing software (for example Image-J), which is taken as the transmission.

The 100,000 hour decomposition half-life temperature is a temperature at which when a sample (for example a fluorinated copolymer) is heated at a certain temperature, the time over which 50 mass% of the sample is heat-decomposed (half-life time) is 100,000 hours. The decomposition half-life temperature is obtained by thermogravimetric analysis (TG) of the sample. By reaction kinetic analysis of the TG data by Ozawa method, the activation anergy by the thermal decomposition and the constant temperature degradation time are obtained (constant temperature degradation time=100,000 hours 50% decomposition half-life temperature).

The constituents described below are examples (typical examples) of the embodiment of the present invention, and the present invention is by no means restricted to the following description.

[Polymer alloy]

The polymer alloy according to an embodiment of the present invention is a polymer alloy having a fluorinated copolymer having a carbonyl group-containing group and having a melting point of 250°C or lower (hereinafter sometimes referred to as fluorinated copolymer A), and at least one thermoplastic polymer selected from the group consisting of a polyamide and EVOH, immiscible with the fluorinated copolymer A and having a melting point of 250°C or lower, melt-kneaded. In the polymer alloy, the proportion of the fluorinated copolymer A to the total mass is from 10 to 40 mass%, particles of the fluorinated copolymer A are dispersed in the thermoplastic polymer, and the average particle size of the fluorinated copolymer A particles in the polymer alloy is from 0.001 to 10 μm.

Hereinafter, the polymer alloy of the present invention will sometimes be referred to as the present alloy. Further, the thermoplastic polymer selected from the group consisting of a polyimide and EVOH, immiscible with the fluorinated copolymer A and having a melting point of 250°C or lower, will sometimes be referred to as polymer B.

The fluorinated copolymer A and the polymer B will be described in detail later.

The present alloy may further contain, as the case requires, other component (for example, various chemically reactive compatibilizers, surface treatment agent).

The proportion of the fluorinated copolymer A to the total mass of the present alloy is from 10 to 40 mass%, preferably from 15 to 35 mass%, more preferably from 20 to 30 mass%. When the proportion of the fluorinated copolymer A is within the above range, the present alloy will be excellent in resistance to a high-pressure gas. Further, when the proportion of the fluorinated copolymer A is the lower limit value or more, the present alloy will be excellent in low water absorption, bending properties, elongation, impact resistance, toughness, melt-forming property, processability and gas diffusibility (effect to prevent a gas from remaining in the present alloy), and when it is the upper limit value or less, the present alloy will be excellent in gas barrier property.

In the present alloy, the particles of the fluorinated copolymer A are dispersed in the polymer B, whereby the gas barrier property of the polymer B will hardly be impaired.

The average particle size of the particles of the fluorinated copolymer A in the present alloy is from 0.001 to 10 μm, preferably from 0.01 to 8 μm, more preferably from 0.01 to 5 μm. When the average particle size is the lower limit value or more, the present alloy will be excellent in gas diffusibility (effect to prevent a gas from remaining in the present alloy), and when it is the upper limit value or less, the present alloy will be excellent in mechanical properties such as gas barrier property, toughness, impact resistance and elongation.

The average particle size of the particles of the fluorinated copolymer A may be adjusted, for example, by the content of the functional group (carbonyl group-containing group, hydroxy group, etc.) in the fluorinated copolymer A, the proportion of the fluorinated copolymer A to the total mass of the present alloy, melt-kneading conditions, the molecular weight of the polymer B, the amount of functional groups, various chemically reactive compatibilizers, and a surface treatment agent.

The strain hardening degree of the present alloy is preferably from 0.10 to 1.50, more preferably from 0.15 to 1.00, further preferably from 0.20 to 0.80. When the strain hardening degree is the lower limit value or more, stress

concentration is less likely to occur, the whole present alloy will be a uniform formed product and tends to have favorable melt-forming property, and when it is the upper limit value or less, the present alloy will have favorable elongation and toughness.

The strain hardening degree may be adjusted, for example, by the content of the functional group (carbonyl group-containing group, hydroxy group, etc.) in the fluorinated copolymer A, molecular weights of the fluorinated copolymer A and the polymer B, the amount of functional groups (amino group, hydroxy group, etc.), melt-kneading conditions (temperature, time, etc.), various chemically reactive compatibilizers, and a surface treatment agent. For example, when the content of the functional groups in the fluorinated copolymer A increases or the molecular weight of the fluorinated copolymer A or the polymer B increases, entanglement of molecules when melt-kneaded increases, and the strain hardening degree tends to be high.

The water absorption of the present alloy is preferably 2.5% or lower, more preferably 2.45% or lower, further preferably 2.40% or lower. If the water absorption (moisture absorption) is high, due to influence of water (particularly due to freezing of water in a low temperature atmosphere), void and cracks are likely to occur. When the water absorption is the upper limit value or less, influence of water tends to be small and resultingly, occurrence of void and cracks and the resulting decrease of the gas barrier property can sufficiently be suppressed.

The water absorption may be adjusted, for example, by the proportion of the fluorinated copolymer A to the total mass of the present alloy.

The free volume of the present alloy is preferably 0.1 $nm^3$ or less, more preferably 0.095 $nm^3$ or less, further preferably 0.090 $nm^3$ or less. The lower limit of the free volume of the present alloy is not particularly limited and may, for example, be 0.01 $nm^3$. When the free volume is the upper limit value or less, the present alloy will be excellent in hydrogen gas resistance, excellent in mechanical properties such that formation of blister by infiltration of hydrogen into the present alloy and cracks to be caused by the blister can be prevented, and also excellent in durability.

The free volume may be adjusted, for example, by the content of the functional group (carbonyl group-containing group, hydroxy group, etc.) in the fluorinated copolymer A, molecular weights of the fluorinated copolymer A and the polymer B, the amount of functional groups (amino group, hydroxy group, etc.), melt-kneading conditions (temperature, time, etc.), various chemically reactive compatibilizers, and a surface treatment agent.

The hydrogen exposure degradation index of the present alloy is preferably 0.5 or less, more preferably 0.4 or less, further preferably 0.3 or less. The lower limit of the hydrogen exposure degradation index of the present alloy is not particularly limited and may, for example, be 0.05. When the hydrogen exposure degradation index is the upper limit value or less, the present alloy will be excellent in resistance to a high-pressure gas.

The hydrogen exposure degradation index may be adjusted, for example, by the content of the functional group (carbonyl group-containing group, hydroxy group, etc.) in the fluorinated copolymer A, molecular weights of the fluorinated copolymer A and the polymer B, the amount of functional groups (amino group, hydroxy group, etc.), melt-kneading conditions (temperature, time, etc.), various chemically reactive compatibilizers, and a surface treatment agent.

<Fluorinated copolymer A>

The fluorinated copolymer A has a carbonyl group-containing group.

The carbonyl group-containing group interacts or reacts with the amide group of the polyamide or the hydroxy group of EVOH. Accordingly, a chemical bond may be formed at the interface between the fluorinated copolymer A and the polymer B, or a part of the polymer B and the fluorinated copolymer A form a block copolymer and the formed block copolymer functions as a compatibilizer, whereby the adhesion of the fluorinated copolymer A and the polymer B at their interface becomes strong, and thus the present alloy will have improved mechanical properties such as gas barrier property, impact resistance and elongation, and mechanical toughness.

Further, the fluorinated copolymer A, which contains fluorine atoms, has such characteristics that it has low hydrogen solubility in hydrogen gas environment under high pressure (for example 70 MPa), like the fluorinated copolymer containing no carbonyl group-containing group. Accordingly, in a mixed system with the polymer B, the low hydrogen solubility of the polymer B will hardly be impaired.

The fluorinated copolymer A may have two or more types of carbonyl group-containing groups.

The carbonyl group-containing group may, for example, be a hydrocarbon group having a carbonyl group between carbon atoms, a carbonate group, a carboxy group, a haloformyl group, an alkoxycarbonyl group, an acid anhydride residue (-C(=O)-O-C(=O)-) or an isocyanate group.

The hydrocarbon group may be a $C_{2-8}$ alkylene group or the like.

The haloformyl group is represented by -C(=O)-X (wherein X is a halogen atom). The halogen atom in the haloformyl group may be a fluorine atom or a chlorine atom, and in view of reactivity with other substrate, preferably a fluorine atom. That is, the haloformyl group is preferably a fluoroformyl group (also called a carbonylfluoride group).

The alkoxy group in the alkoxycarbonyl group is, in view of reactivity with the polymer B, preferably a $C_{1-8}$ alkoxy group, particularly preferably a methoxy group or an ethoxy group.

The carbonyl group-containing group is preferably a group selected from the group consisting of a group having a carbonyl group between carbon atoms in a hydrocarbon group, a carbonate group, a carboxy group, a haloformyl group, an alkoxycarbonyl group and an acid anhydride residue, particularly preferably an acid anhydride residue.

The content of the carbonyl group-containing group is preferably from 10 to 60,000 groups per $1\times10^6$ carbon atoms in the main chain of the fluorinated copolymer A, more preferably from 100 to 50,000 groups, further preferably from 100 to 10,000 groups, particularly preferably from 300 to 5,000 groups. When the content of the carbonyl group-containing group is the lower limit value or more, excellent strain hardening and adhesion between the fluorinated copolymer A and the polymer B at their interface will be achieved, and when it is the upper limit value or less, more excellent heat resistance, weather resistance and chemical resistance will be achieved.

The content of the carbonyl group-containing group may be measured, for example, be nuclear resonance magnetic (NMR) analysis or infrared absorption spectroscopy. For example, by means of infrared absorption spectroscopy as described in JP-A-2007-314720, the proportion (mol%) of units containing the carbonyl group-containing group to all units constituting the fluorinated copolymer A is obtained, and from the proportion, the content of the carbonyl group-containing group can be calculated.

The carbonyl group-containing group may be contained in the units constituting the fluorinated copolymer A, may be contained in terminals of the main chain of the fluorinated copolymer A, or may be contained in both of them. In order that the content of the carbonyl group-containing group will readily be adjusted, it is preferably contained in at least monomer units constituting the fluorinated copolymer A.

As a method of introducing the carbonyl group-containing group to the fluorinated copolymer, for example, in polymerization of a monomer mixture containing a fluorinated monomer to produce the fluorinated copolymer A, a method of incorporating a monomer having a carbonyl group-containing group in the monomer mixture (method (1)), a method of polymerizing the monomer mixture in the presence of a radical polymerization initiator or chain transfer agent having a carbonyl group-containing group (method (2)), and a method of graft-polymerizing a monomer having a carbonyl group-containing group to the fluorinated copolymer (method (3)) may be mentioned. Among them, the method (1) is preferred.

In the method (2), the carbonyl group-containing group is introduced to the main chain terminals.

As specific examples of the method (3), a method of kneading the monomer having a carbonyl group-containing group and the fluorinated copolymer, and irradiating the kneaded product with radial rays; and a method of kneading the monomer having a carbonyl group-containing group, the fluorinated copolymer and the radical initiator and melt-extruding the kneaded product, may be mentioned.

The monomer having a carbonyl group-containing group may, for example, be a monomer having an acid anhydride residue such as maleic anhydride, itaconic anhydride, citraconic anhydride or 5-norbornene-2,3-dicarboxylic anhydride (also called bicyclo[2.2.1]hept-2-ene-5,6-dicarboxylic anhydride), a monomer having a carboxy group such as acrylic acid, methacrylic acid, maleic acid, fumaric acid, itaconic acid, citraconic acid, crotonic acid, bicyclo[2.2.1]hept-2-ene-5,6-dicarboxylic acid, $CF_2=CFOCF_2CF_2CF_2COOH$, $CF_2=CFOCF_2CF(CF_3)OCF_2CF_2COOH$ or $CH_2=CHCF_2CF_2CF_2COOH$, or its alkyl ester (such as methyl ester or ethyl ester), alkali metal salt or ammonium salt.

The polymerization initiator having a carbonyl group-containing group may, for example, be a peroxide having a peroxycarbonate group or a peroxide having a peroxyester. A peroxide having a peroxycarbonate group is particularly preferred. The peroxide having a peroxycarbonate group may, for example, be diisopropyl peroxycarbonate, di-n-propyl peroxydicarbonate, t-butyl peroxydiisopropylcarbonate, bis(4-t-butylcyclohexyl)peroxydicarbonate, di-2-ethylhexyl peroxydicarbonate.

The chain transfer agent having a carbonyl group-containing group may, for example, be a carboxylic acid such as acetic anhydride or thioglycolic acid.

The fluorinated copolymer A preferably further has a hydroxy group. By further having a hydroxy group, as compared with a case having no hydroxy group, the fluorinated copolymer A tends to be excellent in heat resistance, durability and miscibility.

The content of the hydroxy group in the fluorinated copolymer A is preferably 2 equivalent/$10^6$ g or more, more preferably 4 equivalent/$10^6$ g or more, particularly preferably 5 equivalent/$10^6$ g or more.

In a case where the fluorinated copolymer A has a hydroxy group, the hydroxy group may be contained in the units constating the fluorinated copolymer A, may be contained in terminals of the main chain of the fluorinated copolymer A, or may be contained in both of them. From the viewpoint of mechanical properties such as the melting point and the glass temperature, heat resistance, the monomer to be used for polymerization, and the solvent, the hydroxy group is contained preferably at least in terminals of the main chain of the fluorinated copolymer A.

As a method of introducing the hydroxy group to the fluorinated copolymer, for example, the above-mentioned methods of introducing the carbonyl group-containing group to the fluorinated copolymer, wherein the carbonyl group-containing group is replaced with the hydroxy group, may be mentioned. Particularly, a method of polymerizing the monomer mixture in the presence of a chain transfer agent having a hydroxy group is preferred.

The chain transfer agent having a hydroxy group may, for example, be an alcohol such as methanol, ethanol, propanol or butanol, or thioglycol.

As the fluorinated copolymer A, in view of low temperature mechanical properties, heat resistance and low solubility parameter, preferred is a fluorinated copolymer having tetrafluoroethylene (hereinafter sometimes referred to as TFE) units (hereinafter this copolymer may sometimes be referred to as TFE copolymer).

The TFE copolymer may further have units of a monomer other than TFE.

The monomer other than TFE may be any monomer copolymerizable with TFE, and may, for example, be a fluorinated monomer other than TFE, or a non-fluorinated monomer.

The fluorinated monomer other than TFE may, for example, be hexafluoropropylene (hereinafter sometimes referred to as HFP), vinylidene fluoride, a perfluoro(alkyl vinyl ether), $CH_2=CX^1(CF_2)_nX^2$ (wherein $X^1$ and $X^2$ are each independently a hydrogen atom or a fluorine atom, and n is an integer of from 2 to 8) (hereinafter sometimes referred to as FAE).

In FAE, when n in the formula is 2 or more, the present alloy tends to be more excellent in heat resistance and stress crack resistance. When n is 8 or less, favorable polymerization reactivity tends to be achieved. n is preferably from 2 to 6, more preferably 2, 4 or 6. As FAE, two or more types may be used. As specific examples of preferred FAE, $CH_2=CH(CF_2)_2F$, $CH_2=CH(CF_2)_4F$, $CH_2=CH(CF_2)_6F$ and $CH_2=CF(CF_2)_3H$ may be mentioned. As FAE, $CH_2=CHR^f$ (wherein $R^f$ is a $C_{2-6}$ perfluoroalkyl group) is particularly preferred. The number of carbon atoms of $R^f$ is particularly preferably 4.

The non-fluorinated monomer may, for example, be an olefin monomer such as ethylene or propylene, a vinyl ether, a vinyl ester or other halogen-containing monomer.

As specific examples of the TFE copolymer, a copolymer having TFE units and HFP units (hereinafter sometimes referred to as TFE/HFP copolymer, the same applies to other copolymers), a TFE/perfluoro(alkyl vinyl ether) copolymer, a TFE/perfluoro(alkyl vinyl ether)/HFP copolymer, an ethylene/TFE copolymer, an ethylene/chlorotrifluoroethylene copolymer, an ethylene/TFE/HFP copolymer, an ethylene/HFP/FAE copolymer and an ethylene/TFE/HFP/FAE copolymer may be mentioned.

The TFE copolymer preferably has ethylene units in view of low temperature mechanical properties, forming property, easy adjustment of the melting point, and low specific gravity, and is more preferably an ethylene/TFE copolymer, an ethylene/TFE/HFP copolymer, an ethylene/TFE/FAE copolymer or an ethylene/TFE/HFP/FAE copolymer.

The TFE copolymer preferably has FAE units with a view to improving stress crack resistance and keeping favorable productivity of the TFE copolymer.

The fluorinated copolymer A is preferably the following fluorinated copolymer A1.

Fluorinated copolymer A1: a fluorinated copolymer having units a1 which are TFE units, units a2 which are ethylene units, units a3 which are monomer units copolymerizable with ethylene and TFE, having no carbonyl group-containing group, and a carbonyl group-containing group, wherein at least part of the units a3 are FAE units.

As FAE, the same compounds as mentioned above may be mentioned, and preferred embodiments are also the same.

In the fluorinated copolymer A1, the carbonyl group-containing group is preferably an acid anhydride residue.

In a case where the carbonyl group-containing group is an acid anhydride residue, the fluorinated copolymer A1 preferably has units a4 which are units of a non-fluorinated monomer having an acid anhydride residue.

The non-fluorinated monomer having an acid anhydride residue may, for example, be maleic anhydride, itaconic anhydride, citraconic anhydride or 5-norbornene-2,3-dicarboxylic anhydride.

The total molar amount of the units a1, the units a2 and the units a3 to the total molar amount of all units constituting the fluorinated copolymer A1 is, in view of low temperature mechanical properties, forming property, easy adjustment of the melting point, low specific gravity, heat resistance, and low solubility parameter, preferably 90 mol% or more, more preferably 95 mol% or more, further preferably 97 mol% or more. When the total molar amount of the units a1, the units a2 and the units a3 is the lower limit value or more, favorable low temperature mechanical properties, forming property, easy adjustment of the melting point, low specific gravity, heat resistance and low solubility parameter will be achieved.

The total molar amount of the units a1, the units a2 and the units a3 to the total molar amount of all units constituting the fluorinated copolymer A1 may be 100 mol%, and in a case where the fluorinated copolymer A1 has the units a4, it is preferably 99.99 mol% or less, more preferably 99.95 mol% or less, further preferably 99.9 mol% or less.

The molar amount of the units a3 to the total molar amount of the units a1, the units a2 and the units a3 is preferably from 3 to 14 mol%, more preferably from 5 to 12 mol%, further preferably from 7 to 11 mol%.

The molar amount of the FAE units to the total molar amount of the units a1, the units a2 and the units a3 is preferably 3 mol% or more, more preferably 5 mol% or more, particularly preferably 7% or more.

In a case where the fluorinated copolymer A1 has the units a4, the molar amount of the units a4 to the total molar amount of all units constituting the fluorinated copolymer A1 is preferably from 0.01 to 10 mol%, more preferably from 0.05 to 5 mol%, further preferably from 0.1 to 3 mol%. When the molar amount of the units a4 is the lower limit value or more, favorable miscibility with the polymer B will be achieved, and fine dispersion of the fluorinated copolymer A1 is likely to be achieved, and resultingly, a homogeneous polymer alloy tends to be obtained. That is, a sea-island

structure in which the fluorinated copolymer A1 forms fine islands is likely to be formed and resultingly, an effect of improving flexural fatigue resistance will sufficiently be obtained, and void and aggregates are less likely to occur, and gas barrier property and melt forming property which are inherent advantages of the polymer B can sufficiently be maintained.

The melting point of the fluorinated copolymer A is 250°C or lower, preferably from 120 to 240°C, more preferably from 150 to 210°C, further preferably from 170 to 190°C. When the melting point of the fluorinated copolymer A is the upper limit value or less, the difference with the melting point of the polymer B will be small, the melting temperature in production of the present alloy can be set lower, and degradation and deterioration of the color of the polymer B due to heat can be suppressed.

The melting point of the fluorinated copolymer A may be adjusted, for example, by the composition of the monomers forming the fluorinated copolymer A, and the content of the carbonyl group-containing group. For example, as the proportion of monomer units having a carbonyl group-containing group increases, the melting point tends to be low.

The fluorinated copolymer A preferably satisfies that it has a flexural modulus of 1,000 MPa or less, it is not broken in Izod impact test at -40°C, it has a brittle temperature of -80°C or lower, and it shows ductile fracture in three-point bending test at -40°C. When it satisfies such requirements, the fluorinated copolymer A will have favorable toughness properties at low temperature, it does not undergo brittle fracture, it has ductile low temperature mechanical properties and it will be a material having reliable low temperature mechanical properties.

The flexural modulus of the fluorinated copolymer A is preferably 1,200 MPa or less, more preferably 1,000 MPa or less. The lower limit of the flexural modulus is, for example, 300 MPa.

The brittle temperature of the fluorinated copolymer A is preferably -50°C or lower, more preferably -80°C or lower. The lower limit of the brittle temperature is, for example, -150°C.

The flexural modulus and the brittle temperature of the fluorinated copolymer A may be adjusted, for example, by the composition of the monomers forming the fluorinated copolymer A (for example the proportion of TFE). For example, as the proportion of TFE increases, the flexural modulus tends to be low and the brittle temperature tends to be low.

The tensile break strength after the fluorinated copolymer A is exposed to an atmospheric temperature of 170°C for 500 hours (hereinafter sometimes referred to as post 170°C exposure tensile strength) is preferably 70% of higher, preferably 75% or higher, to the tensile break strength before the exposure. The upper limit of the post 170°C exposure tensile strength is for example 150%. When the post 170°C exposure tensile strength is the lower limit value or more, more excellent heat resistance and durability will be achieved.

The post 170°C exposure tensile strength may be adjusted by the composition of the monomers forming the fluorinated copolymer A.

The tensile elongation at break after the fluorinated copolymer A is exposed to an atmospheric temperature of 170°C for 500 hours (hereinafter sometimes referred to as the post 170°C exposure tensile elongation) is preferably 100% or higher, more preferably 120% or higher, to the tensile elongation at break before the exposure. The upper limit of the post 170°C exposure tensile elongation is for example 200%. When the post 170°C exposure tensile elongation is the lower limit value or more, more excellent heat resistance and durability will be achieved.

The post 170°C exposure tensile elongation may be adjusted by the composition of the monomers forming the fluorinated copolymer A.

The decomposition half-life temperature for 100,000 hours of the fluorinated copolymer A is, for example, 120°C or higher, preferably 135°C or higher, more preferably 140°C or higher. The upper limit of the decomposition half-life temperature for 100,000 hours is, for example, 180°C. When the decomposition half-life temperature for 100,000 hours of the fluorinated copolymer A is the lower limit value or more, more excellent heat resistance and durability will be achieved.

The decomposition half-life temperature may be adjusted by the composition of the monomers forming the fluorinated copolymer A.

The hydrogen gas permeability coefficient of the fluorinated copolymer A is preferably 5,000 [cc•20 $\mu$m/(m$^2$•24hs•atm)] or more, more preferably 8,000 [cc•20 $\mu$m/(m$^2$•24hs•atm)] or more, and is preferably 18,000 [cc•20 $\mu$m/(m$^2$•24hs•atm)] or less, more preferably 15,000 [cc•20 $\mu$m/(m$^2$•24hs•atm)] or less. When the hydrogen gas permeability coefficient of the fluorinated copolymer A is the lower limit value or more, favorable hydrogen gas diffusibility tends to be achieved, and when it is the upper limit value or less, the polymer alloy tends to be more excellent in gas barrier property.

The volume flow rate (hereinafter sometimes referred to as Q value) of the fluorinated copolymer A is preferably from 0.1 to 1,000 mm$^3$/sec, more preferably from 1 to 500 mm$^3$/sec, further preferably from 2 to 200 mm$^3$/sec. The Q value is an index indicating melt flowability of a polymer, which is problematic in melt-forming the polymer, and serves as a measure of the molecular weight. That is, a high Q value indicates a low molecular weight, and a low Q value indicates a high molecular weight. When the Q value is the lower limit value or more, excellent melt forming property tends to be achieved, and when it is the upper limit value or less, excellent mechanical strength tends to be achieved.

The Q value is the extrusion rate of the fluorinated copolymer A extruded at a temperature higher by 50°C than the melting point of the fluorinated copolymer A under a load of 7 kg into an orifice having a diameter of 2.1 mm and a length of 8 mm, using Flow Tester manufactured by Shimadzu Corporation.

The method for producing the fluorinated copolymer A is not particularly limited and usually, a method may be employed in which the fluorinated monomer and as the case requires other monomer are charged into a reactor and copolymerized with a commonly used radical polymerization initiator and as the case requires a chain transfer agent.

As an example of polymerization method, known bulk polymerization , solution polymerization using an organic solvent as a polymerization medium, suspension polymerization using as a polymerization medium an aqueous medium and as the care requires an appropriate organic solvent, and emulsion polymerization using as a polymerization medium an aqueous medium and an emulsifier may be mentioned. Among them, solution polymerization is preferred. Polymerization may be conducted by batch or continuously using a single-tank or multi-tank stirring polymerization apparatus, a tubular polymerization apparatus or the like.

The radical polymerization initiator is preferably such an initiator that the temperature at which the half-life is 10 hours is from 0 to 100°C, more preferably from 20 to 90°C. The radical polymerization initiator may, for example, be an azo compound such as azobisisobutyronitrile, a peroxydicarbonate such as diisopropyl peroxydicarbonate, a peroxy ester such as tert-butyl peroxypivalate, tert-butyl peroxyisobutyrate or tert-butyl peroxyacetate, a non-fluorinated diacyl peroxide such as isobutyryl peroxide, octanoyl peroxide, benzoyl peroxide or lauroyl peroxide, a fluorinated diacyl peroxide such as $(Z(CF_2)_pCOO)_2$ (wherein Z is a hydrogen atom, a fluorine atom or a chlorine atom, and p is an integer of from 1 to 10), or an inorganic peroxide such as potassium persulfate, sodium persulfate or ammonium persulfate.

The polymerization medium may, for example, as described above, be an organic solvent or an aqueous medium. The organic solvent may, for example, be a fluorinated hydrocarbon, a chlorinated hydrocarbon, a fluorochlorinated hydrocarbon, an alcohol or a hydrocarbon.

The chain transfer agent may, for example, be an alcohol such as methanol or ethanol; a chlorofluorohydrocarbon such as 1,3-dihloro-1,1,2,2,3-pentafluoropropane or 1,1-dichloro-1-fluoroethane; a hydrocarbon such as pentane, hexane or cyclohexane; or a fluorinated hydrocarbon such as 1-hydrotridecafluorohexane.

The polymerization conditions are not particularly limited, and for example, the polymerization temperature is preferably from 0 to 100°C, particularly preferably from 20 to 90°C. The polymerization pressure is preferably from 0.1 to 10 MPa, particularly preferably from 0.5 to 3 MPa. The polymerization time may vary depending upon the polymerization temperature and the polymerization pressure and the like, and is preferably from 1 to 30 hours, particularly preferably from 2 to 10 hours.

<Polyamide>

As the polyamide, for example, the following polyamide may be mentioned.

Homopolymer polyamide: polycaproamide (PA6), poly-ω-aminoheptanoic acid (PA7), poly-ω-aminononanoic acid (PA9), polyundecanamide (PA11), polylauryllactam (PA12), etc.

Aliphatic copolymer polyamide: polyethylenediamine adipamide (PA26), polytetramethylene adipamide (PA46), polyhexamethylene adipamide (PA66), polyhexamethylene sebacamide (PA610), polyhexamethylene dodecanamide (PA612), polyoctamethylene adipamide (PA86), polydecamethylene adipamide (PA108), a caprolactam/lauryl lactam copolymer (PA6/12), a caprolactam/ω-aminononanoic acid copolymer (PA6/9), a caprolactam/hexamethylene diammonium adipate copolymer (PA6/66), a lauryl lactam/hexamethylene diammonium adipate copolymer (PA12/66), an ethylenediamine adipamide/hexamethylene diammonium adipate copolymer (PA26/66), a caprolactam/hexamethylene diammonium adipate/hexamethylene diammonium sebacate copolymer (PA66/610), an ethylene ammonium adipate/hexamethylene diammonium adipate/hexamethylene diammonium sebacate copolymer (PA6/66/610), etc.

Aromatic copolymer polyamide: polyhexamethylene isophthalamide, polyhexamethylene terephthalamide, poly-m-xylylene adipamide (PAMXD6), a hexamethylene isophthalamide/terephthalamide copolymer, poly-p-phenylene terephthalamide, poly-p-phenylene•3-4' diphenyl ether terephthalamide, etc.

Amorphous polyamide: a polyamide elastomer having polyamide units and polyetherdiamine units, etc.

Terminal-modified polyamide: polyamide having the terminal of the above polyamide modified with e.g. a carboxy group or an amino group of e.g. methylene benzylamine or m-xylenediamine, etc.

Among them, in view of hydrogen gas barrier property and heat resistance, preferred are polyhexamethylene adipamide (PA66), polycaproamide (PA6), polyhexamethylene sebacamide (PA610), polyundecanamide (PA11), a caprolactam/hexamethylene diammonium adipate copolymer (PA6/66), and poly-m-xylylene adipamide (PAMXD6). Such polyamides may be used in combination of two or more.

The melting point of the polymer B is 250°C or lower. Accordingly, the melting point of the polyamide is also 250°C or lower. The melting point of the polyamide is preferably from 150 to 250°C, more preferably from 170 to 245°C, further preferably from 200 to 240°C. When the melting point of the polyamide is the upper limit value or less, the polyamide will have favorable melt-kneading property with other polymer, and when it is the lower limit value or more,

favorable heat resistance, hydrogen gas barrier property and mechanical properties will be achieved.

The hydrogen gas permeability coefficient of the polymer B is, in view of gas barrier property of the polymer alloy, preferably 1,000 [cc•20 μm/(m$^2$•24hs•atm)] or less. Accordingly, the hydrogen gas permeability coefficient of the polyamide is also preferably 1,000 [cc•20 μm/(m$^2$•24hs•atm)] or less. The hydrogen gas permeability coefficient of the polyamide is more preferably 850 [cc•20 μm/(m$^2$•24hs•atm)] or less. The lower limit of the hydrogen gas permeability coefficient of the polyamide may, for example, be 50 [cc•20 μm/(m$^2$•24hs•atm)].

<EVOH>

EVOH is a copolymer having ethylene units and vinyl alcohol units.

EVOH, which has ethylene units, has a larger difference between the melting point and the decomposition temperature than a polyvinyl alcohol having no ethylene units, and can thereby be melt-formable. Further, by having ethylene units, EVOH is excellent in water resistance as compared with a polyvinyl alcohol.

EVOH may further have vinyl ester units.

The vinyl ester may, for example, be vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, vinyl versatate or vinyl trifluoroacetate. Among them, from economical viewpoint, vinyl acetate is preferred.

EVOH is usually obtained by saponifying a copolymer of ethylene and a vinyl ester (an ethylene/vinyl ester copolymer). Polymerization may be conducted by an optional known polymerization method such as solution polymerization, suspension polymerization or emulsion polymerization, and commonly, solution polymerization using methanol as a solvent is employed. Saponification of the obtained ethylene/vinyl ester copolymer may also be conducted by a known method. EVOH thus produced has ethylene units and vinyl alcohol units and in some cases, a small amount of vinyl ester units remaining non-saponified.

The content of ethylene units in EVOH is, to all units constituting EVOH, preferably from 15 to 60 mol%, more preferably from 18 to 38 mol%, further preferably from 18 to 34 mol%. When the content of the ethylene units is the lower limit value or more, favorable water resistance tends to be achieved, and when the content of ethylene units is the upper limit value or less, favorable hydrogen resistance under very high pressure and hydrogen gas barrier property tend to be achieved.

The content of ethylene units may be measured in accordance with ISO14663.

The saponification degree of EVOH is preferably 90 mol% or more, more preferably 95 mol% or more, further preferably 99.5 mol% or more, and may be 100 mol%. When the saponification degree is the lower limit value or more, favorable gas barrier property tends to be achieved.

The saponification degree may be measured in accordance with JIS K6726 (with a solution having EVOH uniformly dissolved in a water/methanol solvent).

EVOH may further have units of a monomer having a primary hydroxy group in its side chain (hereinafter sometimes referred to as units b). By introducing the units b to EVOH, the crystal size can be reduced without deteriorating the hydrogen bond at the amorphous portion, and thus the melting point can be lowered without impairing hydrogen gas barrier property and the like even if the ethylene unit content is low. When the melting point is low, the difference between the melting point and the heat decomposition temperature tends to be large, and forming processability tends to improve.

Conventionally, EVOH has a higher melting point as the content of ethylene units decreases, and thus the difference between the heat decomposition temperature and the melting point of the copolymer tends to be small, and the forming processability tends to deteriorate. According to C.A.FINCH, "POLYVINYL ALCOHOL-DEVELOPMENTS", page 205, Figure 8.4, it is illustrated that when the content of ethylene units is less than 20 mol%, the melting point is 200°C or higher, and in such a region, the difference with the heat decomposition temperature of the copolymer tends to be small.

To introduce the units b to EVOH, for example, at the time of production of EVOH, a monomer having a primary hydroxy group in its side chain is copolymerized with ethylene and a vinyl ester.

The monomer having a primary hydroxy group at its side chain may, for example, be a monohydroxyalkyl group-containing monomer such as allyl alcohol, 3-buten-1-ol, 4-penten-1-ol, 5-hexan-1-ol or 6-hepten-1-ol, a 2-substituted diol monomer such as 2-methylene-1,3-propanediol, a 1,2-diol group-containing monomer such as 3,4-diol-1-butene, 4,5-diol-1-pentene, 4,5-diol-3-methyl-1-pentene or 5,6-diol-1-hexene, or a glycerin monoallyl ether. Such monomers may be used in combination of two or more. Among such monomers, with a view to obtaining units having a 1,2-diol structure in the side chains, preferred is a 1,2-diol group-containing monomer. When EVOH has units having a 1,2-diol structure in the side chains, favorable hydrogen gas barrier property and forming property tend to be achieved.

When the units b are introduced to EVOH, it is preferred to conduct copolymerization in a state where the primary hydroxy group of the monomer having the primary hydroxy group in its side chain is protected by a convention method such as esterification.

The monomer having a protected primary hydroxy group in its side chain may, for example, be an esterified

product of a 2-substutted diol monomer such as hydroxymethyl vinylidene diacetate, an acylated product of a 1,2-diol group-containing monomer such as 4,5-diacyloxy-1-pentene or 5,6-diacyloxy-1-hexene, a vinyl carbonate monomer such as vinylethylene carbonate, or 2,2-dialkyl-4-vinyl-1,3-dioxolane. The hydroxymethyl vinylidene diacetate may, for example, be 1,3-diacetoxy-2-methylenepropane, 1,3-dipropionyloxy-2-methylenepropane or 1,3-dibutylonyloxy-2-methylenepropane. Such monomers may be used in combination of two or more. Among such monomers, in view of production efficiency, preferred is 1,3-diacetoxy-2-methylenepropane, and with a view to obtaining units having a 1,2-diol structure in the side chain, preferred is an acylated product of a 1,2-diol group-containing monomer.

As an example of preferred units b, units having a 1,2-glycol bond in the side chain may be mentioned. As an example of the units having a 1,2-glycol bond in the side chain, units represented by the following formula (5) may be mentioned.

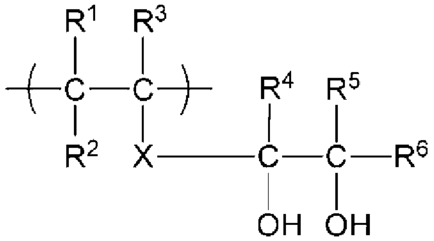

· · · (5)

wherein $R^1$ to $R^3$ are each independently a hydrogen atom or an organic group, X is a single bond or a bonding chain, $R^4$ to $R^6$ are each independently a hydrogen atom or an organic group.

The organic group as each of $R^1$ to $R^6$ is not particularly limited, and is preferably a $C_{1-4}$ alkyl group such as a methyl group, an ethyl group, a n-propyl group, an isopropyl group, a n-butyl group, an isobutyl group or a tert-butyl group. The alkyl group may have a substituent such as a halogen atom, a hydroxy group, an ester group, a carboxylic acid group or a sulfonic group, as the case requires.

It is preferred that all of $R^1$ to $R^6$ are hydrogen atoms, however, they may be organic groups in an amount to such an extent that the copolymer properties are not significantly impaired.

Each of $R^1$ to $R^3$ is preferably a hydrogen atom or a $C_{1-4}$ alkyl group, particularly preferably a hydrogen atom. Each of $R^4$ to $R^6$ is a hydrogen atom or a $C_{1-4}$ alkyl group, particularly preferably a hydrogen atom.

The bonding chain as X is not particularly limited, and may, for example, be a hydrocarbon chain, a bonding chain having a hetero atom (excluding a metal atom) or a bonding chain having a metal atom.

The hydrocarbon chain may, for example, be an alkylene group, an alkenylene group, an alkynylene group or an arylene group (such as a phenylene group or a naphthylene group). Such a hydrocarbon chain may have a substituent (for example, a halogen atom such as a fluorine atom, a chlorine atom or a bromine atom). The bonding chain having a hetero atom (excluding a metal atom) may, for example, be a bonding chain containing an ether bond moiety such as $-O-$, $-(CH_2O)_m-$, $-(OCH_2)_m-$ or $-(CH_2O)_mCH_2-$; a bonding chain containing a carbonyl group such as $-CO-$, $-COCO-$, $-CO(CH_2)_mCO-$ or $-CO(C_6H_4)CO-$; a bonding chain containing a sulfur atom such as $-S-$, $-CS-$, $-SO-$ or $-SO_2-$; a bonding chain containing a nitrogen atom such as -NR-, -CONR-, -NRCO-, -CSNR-, -NRCS- or -NRNR-; or a bonding chain containing a phosphorus atom such as $-HPO_4-$.

The bonding chain having a metal atom may, for example, be a bonding chain containing a silicon atom such as $-Si(OR)_2-$, $-OSi(OR)_2-$ or $-OSi(OR)_2O-$; a bonding chain containing a titanium atom such as $-Ti(OR)_2-$, $-OTi(OR)_2-$ or $-OTi(OR)_2O-$; or a bonding chain containing an aluminum atom such as -Al(OR)-, -OAl(OR)- or -OAl(OR)O-.

In such bonding chains, R is each independently a hydrogen atom or a substituent, and is preferably a hydrogen atom or an alkyl group. m is a natural number and usually from 1 to 30, preferably from 1 to 15, particularly preferably from 1 to 10.

Among such bonding chains, in view of stability at the time of production and at the time of use, a $C_{1-10}$ hydrocarbon chain is preferred, a $C_{1-6}$ hydrocarbon chain is more preferred, and a $C_1$ hydrocarbon chain is particularly preferred.

X is preferably a single bond, in view of improvement of crystallinity and reduction of free volume (free volume pore size) at an amorphous portion.

The units represented by the above formula (5) are particularly preferably units represented by the following formula (5a), wherein all $R^1$ to $R^6$ are hydrogen atoms, and X is a single bond.

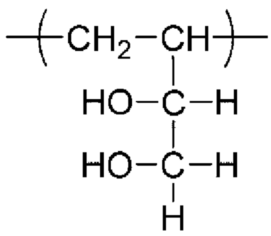

・・・(5a)

As another example of preferred units b, units represented by the following formula (6) may also be mentioned.

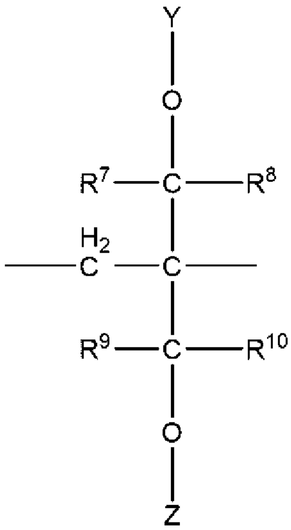

・・・(6)

wherein $R^7$ to $R^{10}$ are each independently a hydrogen atom or a $C_{1-10}$ alkyl group, which may contain a hydroxy group, an alkoxy group or a halogen atom. Y and Z are each independently a hydrogen atom, a formyl group or a $C_{2-10}$ alkanoyl group.

In a case where EVOH has the units b, the content of the units b is, to all units constituting EVOH, preferably from 0.5 to 15 mol%, more preferably from 0.5 to 12 mol%, further preferably from 1 to 8 mol%, particularly preferably from 2 to 4 mol%. When the content of the units b is the lower limit value or more, the effect of lowering the melting point is likely to be achieved, and favorable melt forming property tends to be achieved, and when it is the upper limit value or less, favorable durability tends to be achieved, probably because crystallinity of the copolymer will sufficiently be secured.

It is also possible to adjust the content of the units b by blending two types of EVOHs differing in the content of the units b. in such a case, the difference in the ethylene content between the respective EVOHs is preferably less than 2 mol%. It is also possible to adjust the content of the units b by blending EVOH having the units b and EVOH having no units b.

EVOH may further have monomer units other than the above within a range not to impair the effects of the present invention (usually 3 mol% or less, preferably 2 mol% or less to all units constituting EVOH).

As other monomer, for example, the following polymers may be mentioned. Such monomers may be used in combination of two or more.

Olefins: propylene, 1-butene, isobutene, etc.

Unsaturated acids and their derivatives: unsaturated acids such as acrylic acid, methacrylic acid, crotonic acid, phthalic acid (anhydride), maleic acid (anhydride) and itaconic acid (anhydride), their salts and mono- and dialkyl esters (number of carbon atoms in the alkyl group: 1 to 18).

Acrylamides: acrylamide, $C_{1-18}$ N-alkylacrylamide, N,N-dimethylacrylamide, 2-acrylamidopropanesulfonate, its salt, acrylamide propyl dimethylamine, its acid salt and its quaternary salt, etc.

Methacrylamides: methacrylamide, N-alkylmethacrylamide (number of carbon atoms in the alkyl group: 1 to 18), N,N-dimethylmethacrylamide, 2-methacrylamidopropanesulfonate, its salt, methacrylamidopropyldimethylamine, its acid salt and its quaternary salt, etc.

N-vinylamides: N-vinylpyrrolidone, N-vinylformamide, N-vinylacetamide, etc.

Vinyl cyanides: acrylonitrile methacrylonitrile, etc.

Vinyl ethers: alkyl vinyl ether (number of carbon atoms in the alkyl group: 1 to 18), hydroxyalkyl vinyl ether,

alkoxy alkyl vinyl ether, etc.

Vinyl halides: vinyl chloride, vinylidene chloride, vinyl fluoride, vinylidene fluoride, vinyl bromide, etc.

Vinylsilanes: vinyltrimethoxysilane, vinylmethyldimethoxysilane, vinyldimethylmethoxysilane, vinyltriethoxysilane, vinylmethyldiethoxysilane, vinyldimethylethoxysilane, vinylisobutyldimethoxysilane, vinylethyldimethoxysilane, vinylmethoxydibutoxysilane, vinyldimethoxybutoxysilane, vinyltributoxysilane, vinylmethoxydihexyloxysilane, vinyldimethoxyhexyloxysilane, vinyltrihexyloxysilane, vinylmethoxydioctyloxysilane, vinyldimethoxyoctyloxysilane, vinyltrioctyloxysilane, vinylmethoxydilauryloxysilane, vinyldimethoxylauryloxysilane, vinylmethoxydioleyloxysilane, vinyldimethoxyoleyloxysilane, etc.

Cationic group-containing monomers: N-acrylamidemethyl trimethylammonium chloride, N-acrylamideethyl trimethylammonium chloride, N-acrylamidepropyl trimethylammonium chloride, 2-acryloxyethyl trimethylammonium chloride, 2-methacryloxyethyl trimethylammonium chloride, 2-hydroxy-3-methacryloyloxypropyl trimethylammonium chloride, allyltrimethylammonium chloride, methallyltrimethylammonium chloride, 3-butenetrimethylammonium chloride, dimethyldiallylammonium chloride, diethyldiallylammonium chloride, etc.

Other monomers: acetoacetyl group-containing monomer, allyl acetate, allyl chloride, allyl alcohol, dimethylallyl alcohol, trimethyl-(3-acrylamide-3-dimethylpropyl)-ammonium chloride, acrylamide-2-methylpropanesulfonic acid, vinyl ethylene carbonate, etc.

EVOH preferably contains no monomer unit forming a carboxylic acid-modified EVOH, in view of forming property. As a monomer forming a carboxylic acid-modified EVOH, for example, maleic anhydride, itaconic anhydride and succinic anhydride may be mentioned. Such monomer units may be introduced to EVOH by copolymerizing the above monomer with ethylene and a vinyl ester monomer by a known means.

As EVOH, a post-modified EVOH by a known means, for example, EVOH subjected to urethane-forming reaction, acetalized, cyanoethylated or subjected to oxyalkylene formation, may be used.

EVOH may be a mixture of two or more types of EVOHs. As examples of the combination of two or more types of EVOHs, a combination of two or more types of EVOHs differing in the content of the units represented by the formula (1), a combination of two or more types of EVOHs differing in the saponification degree, a combination of two or more types of EVOHs differing in the polymerization degree, and a combination of two or more types of EVOHs differing in the copolymer components may be mentioned.

The melt flow rate (hereinafter sometimes referred to as "MFR") of EVOH is preferably from 0.5 to 100 g/10 min, more preferably from 0.5 to 50 g/10 min, further preferably from 1 to 30 g/10 min. When MFR is the lower limit value or more, the inside of the extruder will not be under high torque at the time of forming, and extrusion tends to easily be conducted, and when it is the upper limit value or less, favorable gas barrier property tends to be achieved.

MFR of EVOH may be measured in accordance with JIS K7210-1: 2014 (ISO1133-1: 2011) at 210°C under a load of 2,160 g.

The melting point of the polymer B is 250°C or lower. Accordingly, the melting point of EVOH is also 250°C or lower. The melting point of EVOH is preferably from 150 to 220°C, more preferably from 160 to 200°C, further preferably from 170 to 195°C. When the melting point of EVOH is the upper limit value or less, favorable forming property and moisture absorption will be achieved, and when it is the lower limit value or more, favorable hydrogen gas barrier property and heat resistance will be achieved.

The hydrogen gas permeability coefficient of the polymer B is, in view of gas barrier property of the polymer alloy, preferably 1,000 [cc•20 $\mu$m/(m$^2$•24hs•atm)] or less. Accordingly, the hydrogen gas permeability coefficient of EVOH is also preferably 1,000 [cc•20 $\mu$m/(m$^2$•24hs•atm)] or less. The hydrogen gas permeability coefficient of EVOH is more preferably 100 [cc•20 $\mu$m/(m$^2$•24hs•atm)] or less, further preferably 50 [cc•20 $\mu$m/(m$^2$•24hs•atm)] or less, particularly preferably 30 [cc•20 $\mu$m/(m$^2$•24hs•atm)] or less. The lower limit of the hydrogen gas permeability coefficient of EVOH is, for example, 0.2 [cc•20 $\mu$m/(m$^2$•24hs•atm)].

The present alloy may contain, as the case requires, an olefin elastomer (hereinafter sometimes referred to as elastomer C). The elastomer C may be an (ethylene and/or propylene)/$\alpha$-olefin copolymer or an (ethylene and/or propylene)/($\alpha$,$\beta$-unsaturated carboxylic acid and/or unsaturated carboxylic acid ester) copolymer.

The (ethylene and/or propylene)/$\alpha$-olefin copolymer is a polymer having ethylene and/or propylene, and an $\alpha$-olefin having 3 or more carbon atoms, copolymerized. The $\alpha$-olefin having 3 or more carbon atoms may be propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 4-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene or 12-ethyl-1-tetradecene.

Further, an unconjugated diene such as 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene -8-methyl-1,7-nonadiene, 4,8-dimethyl-1,4,8-decatriene (DMDT), dicyclopentadiene, cyclohexadiene, dicyclooctadiene, methylene norbornene, 5-vinyl norbornene, 5-ethylidene-2-norbornene, 5-methylene-2-norbornene, 5-isopropylidene-2-norbornene, 6-chloromethyl-5-iropropenyl-2-norbornene, 2,3-diisopropylidene-5-norbornene, 2-ethylidene-3-isopropylidene-5-norbornene or 2-propenyl-2,2-norbornadiene may be copolymerized.

The (ethylene and/or propylene)/(α,β-unsaturated carboxylic acid and/or unsaturated carboxylic acid ester) copolymer is a polymer having ethylene and/or propylene, and an α,β-unsaturated carboxylic acid and/or unsaturated carboxylic acid ester monomer, copolymerized.

The α,β-unsaturated carboxylic acid monomer may be acrylic acid or methacrylic acid, and the α,β-unsaturated carboxylic acid ester monomer may, for example, be methyl ester, ethyl ester, propyl ester, butyl ester, pentyl ester, hexyl ester, heptyl ester, octyl ester, nonyl ester or decyl ester of such an unsaturated carboxylic acid.

An ionomer is one having an olefin and at least some of carboxy groups in an α,β-unsaturated carboxylic acid copolymer ionized by neutralization of metal ions.

As the olefin, ethylene is preferably used, and as the α,β-unsaturated carboxylic acid, acrylic acid or methacrylic acid is preferably used, however, they are not limited to those exemplified here, and an unsaturated carboxylic acid ester monomer may be copolymerized.

The metal ion may, for example, be an alkali metal or an alkaline earth metal such as Li, Na, K, Mg, Ca, Sr or Ba, or Al, Sn, Sb, Ti, Mn, Fe, Ni, Cu, Zn or Cd.

The (ethylene and/or propylene)/α-olefin copolymer, the (ethylene and/or propylene)/(α,β-unsaturated carboxylic acid and/or unsaturated carboxylic acid ester) copolymer, the ionomer polymer and the aromatic vinyl compound/conjugated diene compound block copolymer are preferably polymers modified by a carboxylic acid and/or its derivative. By being modified by such a component, the polymers can have a functional group miscible with EVOH and the polyamide in their molecules.

The functional group miscible with EVOH and the polyamide may, for example, be a carboxy group, an acid anhydride group, a carboxylic acid ester group, a metal carboxylate, a carboxylic acid imide group, a carboxylic acid amide group or an epoxy group. As examples of a compound having such a functional group, acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid, endobicyclo-[2.2.1]-5-heptene-2,3-dicarboxylic acid, and metal salts of such carboxylic acids, monomethyl maleate, monomethyl itaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, dimethyl itaconate, maleic anhydride, itaconic anhydride, citraconic anhydride, endobicyclo-[2.2.1]-5-heptene-2,3-dicarboxylic acid anhydride, maleimide, N-ethylmaleimide, N-butylmaleimide, N-phenylmaleimide, acrylamide, methacrylamide, glycidyl acrylate, glycidyl methacrylate, glycidyl ethacrylate, glycidyl itaconate, and glycidyl citraconate may be mentioned. They may be used in combination of two or more.

Among them, from the viewpoint of low temperature impact resistance, cost and availability, a maleic acid-modified ethylene/propylene copolymer and a maleic acid-modified ethylene/butene copolymer are preferred.

<Method for producing the present alloy>

The present alloy is produced by melt-kneading the fluorinated copolymer A and the polymer B. As the case requires, other component (for example, various chemically reactive compatibilizers or a surface treatment agent) may be added.

The proportion of the fluorinated copolymer A and the proportion of the polymer B to the total mass of all materials to be melt-kneaded are respectively the same as the proportion of the fluorinated copolymer A and the proportion of the polymer B to the total mass of the present alloy.

As the melt-kneading method, a method of using a known melt-kneading apparatus may be mentioned.

As the melt-kneading apparatus, an apparatus having a known melt-kneading function may be mentioned. As the melt-kneading apparatus, a single screw extruder or a twin screw extruder which may have a screw with high kneading effect is preferred, a twin screw extruder is more preferred, and a twin screw extruder having a screw with high kneading effect is particularly preferred. As the screw with high kneading effect, one having sufficient kneading effect on an object to be melt-kneaded and applying no excessive shearing force may be selected. The screw LID is, in view of the kneading effect, preferably 20 or more, more preferably from 30 to 70. "L/D" is a value obtained by dividing the screw full length L (mm) by the screw diameter D (mm).

As specific examples of the melt-kneading apparatus, Labo Plastomill kneading machine (manufactured by Toyo Seiki Seisaku-sho, Ltd.) and KZW series twin screw extruder (manufactured by TECHNOVEL CORPORATION) may be mentioned.

The method of supplying the fluorinated copolymer A and the polymer B to the melt-kneading apparatus is not particularly limited. The fluorinated copolymer A and the polymer B may be preliminarily mixed and supplied to the melt-kneading apparatus, or the fluorinated copolymer A and the polymer B may separately be supplied to the melt-kneading apparatus.

The temperature at which the fluorinated copolymer A and the polymer B are melt-kneaded (hereinafter sometimes referred to as the melt-kneading temperature) is set preferably depending upon the fluorinated copolymer A and the polymer B. The melt-kneading temperature is preferably from 180 to 250°C, more preferably from 200 to 245°C, further preferably from 220 to 240°C.

The melt-kneading of the fluorinated copolymer A and the polymer B is conducted so that particles of the fluorinated copolymer A, having an average particle size of from 0.001 to 10 μm, are dispersed in the polymer B. By properly adjusting the melt-kneading temperature, the extrusion shear rate and the retention time of the object to be melt-kneaded in the melt-kneading apparatus, it is possible to disperse the particles of the fluorinated copolymer A having an average particle size of from 0.001 to 10 μm in the polymer B.

By setting the melt-kneading temperature high, the particles of the fluorinated copolymer A are likely to be dispersed in the polymer B, and coarse particles of the fluorinated copolymer A are less likely to remain. By setting the melt-kneading temperature low, heat decomposition of the fluorinated copolymer A will hardly be accelerated, the obtainable polymer alloy will be more excellent in heat resistance, and the particles of the fluorinated copolymer A will not be too small.

By setting the extrusion shear rate high, the particles of the fluorinated copolymer A are likely to be dispersed in the polymer B, and coarse particles of the fluorinated copolymer A are less likely to remain. By setting the extrusion shear rate low, the particles of the fluorinated copolymer A will not be too small.

By prolonging the retention time of the object to be melt-kneaded in the melt-kneading apparatus, the particles of the fluorinated copolymer A are likely to be dispersed in the polymer B, and coarse particles of the fluorinated copolymer A are less likely to remain. By setting the retention time short, heat decomposition of the fluorinated copolymer A will hardly be accelerated.

Melt-kneading is conducted preferably substantially in the absence of a crosslinking agent and a coagent. "Melt-kneading substantially in the absence of a crosslinking agent and a coagent" means that melt-kneading is conducted while the fluorinated copolymer A is not substantially crosslinked. Whether the fluorinated copolymer A is not substantially crosslinked, may be confirmed by the value of flexural modulus of the polymer alloy.

<Application>

The present alloy is melt-formable, and can be melt-formed into a formed product. The present alloy may be combined or laminated with other material to obtain a composite. As the melt-forming method, a known melt-forming method such as injection molding, extrusion, co-extrusion, blow molding, compression molding, blown-film extrusion, transfer molding or calendaring may be mentioned. The formed product is not particularly limited, and as examples, a sleeve member, a sealing material, a gear, an actuator, a piston, a bearing, a housing, an aircraft interior material, a fuel tube, a bush, a tube, a hose, a tank, a seal, a wire, a cable, a film, a sheet, a bottle and fibers may be mentioned.

The present alloy may be used as a coating material, as formed into a powder. The application of coated articles, ones described in WO2015/182702 may be mentioned.

The present alloy, which is excellent in resistance to a high-pressure gas, is suitably used for a high-pressure gas hose and a high-pressure gas storage container. For example, the present alloy may be used as a constituting material or a liner material for a high-pressure gas hose and a high-pressure gas storage container.

The high-pressure gas is typically a gas having a pressure of 35 to 90 MPa. The pressure is gauge pressure. As specific examples of the high-pressure gas, a high-pressure hydrogen gas, a high-pressure oxygen gas, a high-pressure carbon dioxide gas, a high-pressure nitrogen gas, a high-pressure argon gas, a high-pressure methane gas, a high-pressure acetylene gas, a high-pressure hydrogen chloride gas and a high-pressure nitrous oxide gas may be mentioned.

The high-pressure gas is preferably a high-pressure gas with a molecular weight of less than 10, particularly preferably a high-pressure hydrogen gas. The lower the molecular weight of the high-pressure gas, the more the gas tends to be dissolved in/infiltrate into the polymer. When the high-pressure gas is dissolved in/infiltrates into the polymer, the polymer will degrade. A high-pressure gas is less likely to be dissolved in/infiltrate into the present alloy even if the molecular weight of the high-pressure gas is less than 10, and thus the present alloy is highly useful for a high pressure gas with a molecular weight of less than 10.

The high-pressure gas hose using the present alloy may, for example, be a hose having a layer formed of the present alloy (hereinafter sometimes referred to as the present alloy layer) or a hose having a fiber-reinforced resin layer containing the present alloy and reinforced fibers. The methods for producing the reinforced fibers, and the fiber-reinforced resin containing the present alloy and the reinforced fibers, will be described in detail later. Such hoses may have two or more layers of the present alloy layers or the fiber-reinforced resin layers. In the hose, the thickness of the present alloy layer is, for example, from 0.1 to 10 mm. The thickness of the fiber-reinforced resin layer is, for example, from 1 to 100 mm. As an example of the hose, a hose for high-pressure hydrogen gas transport may be mentioned.

As examples of the high-pressure gas storage container using the present alloy, a storage container having the present alloy layer, and a storage container having a fiber-reinforced resin layer containing the present alloy and

reinforced fibers may be mentioned. Such storage containers may have two or more layers of the present alloy layers or the fiber-reinforced resin layers. In the storage container, the thickness of the present alloy layer is, for example, from 2 to 100 mm. The thickness of the fiber-reinforced resin layer is, for example, from 2 to 200 mm. As an example of the storage container, a hydrogen gas tank for automobiles may be mentioned.

The present alloy described above, in which the particles of the fluorinated copolymer A having a carbonyl group-containing group are dispersed in the polymer B with an average particle size of from 0.001 to 10 μm, is excellent in resistance to a high-pressure gas. For example, even in a case where supply of a high-pressure gas and depressurization are repeatedly carried out, properties such as gas barrier property and flexibility are less likely to degrade by the high-pressure gas, and such properties can be maintained over a long period of time. Further, the present alloy also has favorable gas barrier property, mechanical strength (for example low temperature impact strength) and low moisture absorption. By the structure having the fluorinated copolymer A dispersed in the polymer B and the average particle size of the fluorinated copolymer A being 10 μm or smaller, excellent gas barrier property of the polymer B will sufficiently be maintained.

Further, by the fluorinated copolymer A having a carbonyl group-containing group, a chemical reaction will occur between the fluorinated copolymer A and the polymer B, excellent adhesion between the fluorinated copolymer A and the polymer B at their interface will be achieved, and a gap will hardly form at their interface. Further, by having the fluorinated copolymer A, the present alloy will be excellent in low moisture absorption and mechanical strength. Thus, water is less likely to infiltrate into the alloy, and occurrence of void and cracks due to influence of water (e.g. freezing of water) tends to be suppressed.

(Reinforced fibers)

As the reinforced fibers, inorganic fibers, metal fibers and organic fibers may, for example, be mentioned.

As the inorganic fibers, carbon fibers, graphite fibers, glass fibers, silicon carbide fibers, silicon nitride fibers, alumina fibers, silicon carbide fibers and boron fibers may, for example be mentioned. As the metal fibers, aluminum fibers, brass fibers and stainless steel fibers may, for example, be mentioned. As the organic fibers, aromatic polyamide fibers, polyaramid fibers, poly-p-phenylene benzoxazole (PBO) fibers, polyphenylene sulfide fibers, polyester fibers, acrylic fibers and polyethylene fibers may, for example, be mentioned. The reinforced fibers may be surface-treated. The reinforced fibers may be used alone or in combination of two or more.

As the reinforced fibers, carbon fibers, which have a low specific gravity and having high strength and high elastic modulus, are preferred. The carbon fibers may, for example, be ones as described in WO2013/129169. Particularly, ones described in paragraphs 0018 to 0026 are preferred. As a method for producing carbon fibers, ones as described in paragraphs 0028 to 0033 may be mentioned.

As the reinforced fibers, in view of mechanical properties of the fiber-reinforced formed product, continuous long fibers having a length of 10 mm or longer are preferred.

As a form of the reinforced fibers processed, in view of mechanical properties of the fiber-reinforced resin layer, reinforced fibers formed into a sheet (hereinafter sometimes referred to as reinforced fiber sheet) are preferred. The reinforced fiber sheet may, for example be a reinforced fiber bundle formed of a plurality of reinforced fibers, cloth woven from the reinforced fiber bundles, a unidirectional reinforced fiber bundle having a plurality of reinforced fibers bundled in one direction, unidirectional cloth formed of the unidirectional reinforced fiber bundles, a combination thereof, or a pile of a plurality of reinforced fiber bundles.

In case where the reinforced fibers are continuous fibers, the reinforced fibers are not necessarily continuous over the whole length in the length direction or over the whole width in the width direction of the reinforced fiber sheet and may be split.

<Method for producing fiber-reinforced resin>

The fiber-reinforced resin containing the present alloy and the reinforced fibers may be produced, for example, by impregnating the reinforced fiber sheet with the present alloy.

As a method of incorporating the present alloy into the reinforced fiber sheet, for example, the following two methods may be mentioned.

Method (1): a method of melting pellets or a powder of the present alloy in the presence of the reinforced fiber sheet so that the reinforced fiber sheet is impregnated with the present alloy.

Method (2): a method of melting a film of the present alloy in the presence of the reinforced fiber sheet so that the reinforced fiber sheet is impregnated with the present alloy.

(Method (1))

As a specific example of the method (1), a pile of n layers (wherein n is an integer of 1 or more) of the reinforced fiber sheets and (n+1) layers of the present alloy layers, formed by alternately piling the reinforced fiber sheets and pellets or powder of the present alloy, is hot-pressed by a hot pressing machine to melt the present alloy, whereby the reinforced fiber sheets are impregnated with the present alloy.
The temperature at the time of hot-pressing is the melting point of the present alloy or higher, and is preferably a temperature higher by 5°C or more and by 100°C or less than the higher one of the melting point of the polymer B and the melting point of the fluorinated copolymer constituting the present alloy. The pressure at the time of hot-pressing is preferably from 0.1 to 50 MPa, more preferably from 0.5 to 30 MPa. The hot-pressing time is preferably 3 seconds or longer and 180 minutes or shorter, more preferably 5 seconds or longer and 180 minutes or shorter.
In a case where pellets of the present alloy obtained by melt-kneading are used as they are, the pellets may be mechanically ground into a fine powder. As an apparatus to mechanically grind the pellets, a hammer mill, a pin mill, a disk mill, a rotary mill, a jet mill, a fluidized bed air jet mill, a jaw crusher, a gyratory crusher, a cage mill, a pan crusher, a ball mill, a pebble mill, a rod mill, a tube mill, a disk attrition mill, an attritor and a disc refiner may, for example, be mentioned.
Grinding of the pellets is conducted preferably so that the elastic modulus is higher, and is conducted preferably while the pellets are cooled to a temperature of -40°C or lower. The cooling temperature is more preferably -100°C or lower, further preferably -160°C or lower. As the cooling method, a method of using dry ice or liquid nitrogen may be mentioned.

(Method (2))

As a specific example of the method (2), for example, a pile of n layers (wherein n is an integer of 1 or more) of the reinforced fiber sheets and (n+1) layers of films of the present alloy, formed by alternately piling the reinforced fiber sheets and the films prepared by using the present alloy, is hot-pressed by a hot pressing machine to melt the present alloy, whereby the reinforced fiber sheets are impregnated with the present alloy. The hot-pressing temperature, pressure and time are the same as in the method (1).
The film of the present alloy may be produced by extruding a mlet from a T-die into a film.

EXAMPLES

Now, the present invention will be described in further detail with reference to Examples. However, it should be understood that the present invention is by no means restricted to such specific Examples. Ex. 1 to 6, 11, 13 to 18 and 24 are Comparative Examples, and Ex. 7 to 10, 12, 19 and 21 to 23 are Examples of the present invention.

[Evaluation methods]

(Average particle size of fluorinated copolymer in polymer alloy)

The cross section of the polymer alloy was observed with a SEM to acquire SEM images, at least 100 domains (dispersed particles) in the acquired SEM images were randomly selected using an image processing software (Image-J software), and a histogram of the domain area of all the selected domains was prepared, to calculated the area average size, which was taken as the average particle size of the fluorinated copolymer in the polymer alloy (hereinafter sometimes referred to as the dispersed particle size). The number of classes in the histogram was set in accordance with Sturges' rule ($n=1+\log_2 N$, n: number of classes, N: number of data).

(Uniaxial elongation viscosity)

Using extensional viscosity fixture (ARES-EVF) of a strain control rotational rheometer (ARES, manufactured by TA Instruments), the elongation viscosity $\eta_E^+(t)$ of the sample was measured in a nitrogen atmosphere at a temperature of 240°C at a strain rate $\varepsilon^\bullet$ of $1.0^{s-1}$.

(Dynamic shear viscoelasticity)

Using a strain control rotational rheometer (ARES, manufactured by TA Instruments), the dynamic shear viscoelasticity of the sample was measured in a nitrogen atmosphere at a temperature of 240°C at a frequency of from 0.01 to 100 rad/s with a strain within a linear range in strain sweep test, to obtain the absolute value $\eta(t)$ of the complex

viscosity.

(Hencky strain)

Hencky strain ε(t) was obtained from the product of the strain rate $\varepsilon^{\bullet}$ and the time t.

(Strain hardening degree)

The strain hardening degree SH was obtained in accordance with the above formulae 1 and 2 based on the elongation viscosity $\eta^{+}(t)$ in a nonlinear region obtained by the uniaxial elongation viscosity measurement, the elongation viscosity 3η(t) in a linear region calculated from the absolute value of the complex viscosity obtained by dynamic shear viscoelasticity, and the Hencky strain ε(t).

(Flexural modulus)

The flexural modulus was measured in accordance with ASTM D790.

(Izod impact test)

The Izod impact test was conducted in accordance with ASTM D256.

(Brittle temperature)

The sample was subjected to solid dynamic viscoelasticity measurement, and the peak temperature of γ dispersion obtained from the energy absorption coefficient of the temperature dispersion in solid dynamic viscoelasticity was taken as the brittle temperature.
The solid dynamic viscoelasticity measurement was conducted using a spectrometer (tension module DMS200 connected to measurement analyzer Rheostation SDM5600H manufactured by Seiko Instruments & Electronics Ltd.), under the following conditions.
Test specimen: 20 mm×5 mm×0.08 mm pressed sheet, frequency: 1Hz, temperature-increasing rate: 2°C/min, displacement amplitude: 10 μm, measurement temperature region: -150°C to 180°C.

(Three-point bending test)

The sample was injection-molded to prepare a plurality of 80 mm×10 mm×4 mm test specimens.
The obtained test specimens were subjected to three-point bending test using Autograph AG-IS manufactured by Shimadzu Corporation in accordance with ASTM D790 at a bending rate of 10 mm/min with a distance between supports of 64 mm at a measurement temperature of -40°C. The results are evaluated based on the following standards:

○: ductile (unbroken)
×: brittle (broken).

(Hydrogen gas permeability coefficient)

The hydrogen gas permeability coefficient was measured by differential pressure method gas and water vapor permeation analysis system (manufactured by GTR TEC Corporation, GTR-30XAD) in accordance with JIS K7126-1:2006 (Differential-pressure method) under the following conditions.
Detector: gas chromatograph (TCD, manufactured by Yanaco Technical Science, G2700T), gas: hydrogen gas (dried), pressure difference: 1 atm, temperature: 15±2°C, transmission area: $15.2\times10^{-4}$ $m^2$ (transmission area size: $4.4\times10^{-2}$ m), sample number: n=1.

(Water absorption)

The water absorption was measured in accordance with JIS K7209:2000.

(Free volume)

The sample was injection-molded to prepare a 42 mm×15 mm×2 mm sheet, which was cut about in half in a

length direction to prepare test specimens.

The obtained test specimen was subjected to positron annihilation lifetime spectroscopy (PALS) under the following conditions to obtain the free volume.

Scintillator: $BaF_2$, photomultiplier: manufactured by HAMAMATSU PHOTONICS K.K., H6610MOD, positron source: $^{22}Na$, measurement time: 86400s, measurement temperature: RT (25°C).

From the slope of o-Ps corresponding to the void in an amorphous portion of a polymer in positron annihilation lifetime spectroscopy, the lifeime and the relative intensity were evaluated, and from the obtained lifetime, the free volume VF was obtained in accordance with the following Nakanishi-Jean equation.

$$\tau_{O-PS} = 0.5\left[1 - \frac{R}{R+0.166} + \frac{1}{2\pi}\sin\left(\frac{2\pi R}{R+0.166}\right)\right]^{-1}$$

$$VF = \frac{4}{3}\pi R^3$$

$\tau_{O-PS}$ : lifetime [ns], R: free volume radius [nm], VF: free volume [$nm^3$]

<Principle and apparatus of positron annihilation lifetime spectroscopy>

In an apparatus for positron annihilation lifetime spectroscopy, the lifetime from entrance of positrons $e^+$ into a disk sample till annihilation is measured. For positron annihilation lifetime spectroscopy, it is necessary to know the time of entrance and the time of annihilation of $e^+$, and the time of entrance of $e^+$ from a $^{22}Na$ source can be obtained from the time of detection of 1.28 MeV $\gamma$ rays released at the same time. The $e^+$ annihilation time can be obtained from the time of detection of annihilation $\gamma$ rays (511 keV). The time difference is measured by fast-fast coincidence system. Pulses obtained by $\gamma$ rays are discriminated by a discriminating circuit, and are sent to a time-to-amplitude converter only when simultaneity of incident $\gamma$ rays and annihilation $\gamma$ rays is confirmed by a high speed coincidence circuit. In the time-to-amplitude converter, voltage pulses with a pulse height in proportion to the time difference between the incident pulses and the annihilation pulses are generated, the voltage pulses are converted by an analog-digital converter to digital signals, which are accumulated in a computer, whereby an annihilation curve (decay curve) which decays with time is obtained. In the decay curve having the time (ns) plotted on the horizontal axis and the count number plotted on the vertical axis, first component $\tau$1 which rapidly decays, second component $\tau$2 which slightly gradually decays, third component $\tau$3 which gradually decays, fourth component $\tau$4 which quite gradually decays, etc., are included. They are subjected to inverse Laplace transformation, and the time (ns) is plotted on the horizontal axis and the density function on the vertical axis, whereby distribution of the lifetime of the respective $\tau$ components such as $\tau$1, $\tau$2, $\tau$3 and $\tau$4 appears as peaks. Among them, the third component $\tau$3 indicates the distribution of the size of the free volume VF. The free volume VF is a volume of atomic vacancy with a radius of sub-nanometer order formed in an amorphous portion of a polymer, and relates to the lifetime of positrons $e^+$ and positronium formed by positrons $e^+$ and electrons e-.

(High-pressure hydrogen gas exposure test)

The sample was injection-molded to prepare a disk test specimen of 13 mm in diameter ×2 mm in thickness.

With respect to the obtained test specimen, using a microscope with a LED visible light source (CCD-type microscope VHX-5000) manufactured by KEYENCE CORPORATION, the visible light transmission in a thickness direction (transmission before high-pressure hydrogen gas exposure test) was measured.

For measurement of the visible light transmission, a LED light source was placed on one side of the test sample, visible light was applied from the LED visible light source toward the center of the test specimen, in such a state, an image on the opposite side of the test specimen was acquired by a microscope, and an average brightness within a range of from the center of the test specimen to a radius of 5.5 mm was obtained by an image processing software (Image-J), which was taken as the transmission.

Then, the test specimen was subjected to high-pressure hydrogen gas exposure test of repeatedly conducting exposure to a high-pressure hydrogen gas of 90 MPa for 65 hours three times. After the test, the transmission of the test specimen (transmission after high-pressure hydrogen gas exposure test) was measured in the same manner as above. From the measurement results, the hydrogen exposure degradation index was obtained in accordance with the

following formula.

Hydrogen exposure degradation index=1 - (transmission after high-pressure hydrogen gas exposure test/transmission before high-pressure hydrogen gas exposure test)

Further, after the high-pressure hydrogen gas exposure test, the test specimen was visually observed to confirm whether blister (swelling) occurred or not.

(Tensile break strength retention, tensile elongation at break retention)

The sample was press-formed to prepare a plurality of Type-V test specimens in accordance with ASTM D638.

With respect to some of the obtained test specimens, in accordance with ASTM D638, the tensile break strength (tensile break strength before exposure) and the tensile elongation at break (tensile elongation at break before exposure) were measured.

The remaining test specimens were put in a constant temperature chamber and exposed to a 170°C atmospheric temperature for 500 hours. Of the test specimens after the exposure, the tensile break strength (tensile break strength after exposure) and the tensile elongation at break (tensile elongation at break after exposure) were measured in the same manner as above. From the measurement results, the tensile break strength retention and the tensile elongation at break retention were obtained in accordance with the following formula.

Tensile break strength retention = (tensile break strength after exposure/tensile break strength before exposure)$\times$100

Tensile elongation at break retention=(tensile elongation at break after exposure/tensile elongation at break exposure)$\times$100

(Decomposition half-life temperature for 100,000 hours)

Using thermogravimetric analyzer (manufactured by Seiko Instruments Inc. (SII), TG/DTA6200), thermogravimetric analysis was conducted at temperature-increasing rates of 1, 2, 5, 10 and 20°C/min. From the results, by Ozawa method, the activation anergy of the thermal decomposition reaction was obtained, and the temperature at which the 50% decomposition half-life time was 100,000 hours was obtained.

[Material used]

Fluorinated copolymer-1: fluorinated copolymer having a carbonyl group-containing group, obtained in the after-described Synthetic Example 1.

Fluorinated copolymer-2: fluorinated copolymer having no carbonyl group-containing group, obtained in the same as in the after-described Synthetic Example 1 except that no itaconic acid was used.

Fluorinated copolymer-2 has a hydroxy group, a volume flow rate at 220°C of 12 $mm^3$/sec, a composition of TFE units/ethylene units/HFP units/$CH_2$=$CH(CF_2)_4F$ units=49.4/41.7/7.9/1.0 (mol%), and a melting point of 190°C.

EVOH-1: commercial EVOH. Manufactured by Mitsubishi Chemical Corporation, tradename: Soarnol DC3203RB, MFR (210°C, 2.16 kgf): 3.8 g/10 min, melting point: 183°C, density (23°C): 1.19 g/$cm^3$, ethylene unit content: 32 mol%, saponification degree: 99.5%.

Polyamide-1: commercial PA6. Manufactured by Ube Industries, Ltd., grade name: SF1018A, MFR (235°C, 2.16 kgf): 10.5 g/10 min, melting point: 220°C, density (23°C): 1.07 g/$cm^3$.

Polyamide-2: commercial PAMXD6. Manufactured by MITSUBISHI GAS CHEMICAL COMPANY, INC., grade name: S6001, MFR (260°C, 2.16 kgf): 7 g/10 min, melting point: 240°C, density (23°C): 1.21 g/$cm^3$.

MAH-modified LDPE: commercial MAH (maleic anhydride)-modified low density polyethylene. Manufactured by Mitsui Chemicals, Inc., tradename: TAFMER MA8510, density: 0.885, MAH unit content: 1 mol%, MFR (190°C, 2.16 kgf): 2.4 g/10 min, melting point: 74°C.

The flexural modulus measurement and the Izod impact test of such materials were conducted. Further, the brittle temperature, the tensile break strength retention, the tensile elongation at break retention and the decomposition half-life temperature for 100,000 hours of the fluorinated copolymer-1 and the fluorinated copolymer-2 were evaluated.

The results are shown in Table 1.

[Table 1]

| | Fluorinated copolymer-1 | Fluorinated copolymer-2 | EVOH-1 | Polyamide-1 | Polyamide-2 | MAH-modified LDPE |
|---|---|---|---|---|---|---|
| Strain hardening degree | Linear | Linear | Linear | Linear | Linear | Linear |
| Flexural modulus (MPa) | 895 | 915 | 4350 | 1400 | 45000 | - |
| Izod impact test notched at -40°C (Izod impact strength (J/m)) | Unbroken | Unbroken | Broken (26) | Broken (39) | Broken (26) | Unbroken |
| Brittle temperature (°C): tanδ γ dispersion peak temperature | -103.3 | -101.2 | - | - | - | - |
| Tensile break strength retention after 170°C exposure for 500 hours (%) | 77 | 65 | - | - | - | - |
| Tensile elongation at break retention after 170°C exposure for 500 hours (%) | 121 | 91 | - | - | - | - |
| Decomposition half-life temperature for 100,000 hours (°C) | 147 | 126 | - | - | - | - |

[Synthetic Example 1]

A stainless steel jacketed polymerization vessel having an internal capacity of 1.3 L, equipped with a stirrer, was evacuated of air, 822 g of $CF_3CH_2OCF_2CF_2H$, 1.65 g of methanol and 3.2 g of $CH_2=CH(CF_2)_4F$ were charged, and while the content in the polymerization vessel was stirred, 350 g of HFP, 118 g of TFE and 2.9 g of ethylene where charged, and warm water was run through the jacket to keep the temperature inside the polymerization vessel at 66°C. On that occasion, the pressure in the polymerization vessel was 1.56 MPa (gauge). After the internal temperature was stabilized, 5.4 mL of a 5 mass% $CF_3CH_2OCF_2CF_2H$ solution of tert-butyl peroxypivalate was injected to initiate polymerization. During the polymerization, a gas mixture of TFE/E (54/46 molar ratio) was added so as to keep the internal pressure constant at 1.56 MPaG. In addition, every consumption of 5 g of the TFE/E gas mixture added during the polymerization, 2 ml of a $CF_3CH_2OCF_2CF_2H$ solution containing 7.1 mass% of $CH_2=CH(CF_2)_4F$ and 1.3 mass% itaconic anhydride was added. 350 Minutes after initiation of the reaction, when 70 g of the TFE/ethylene (54/46 molar ratio) gas mixture was added, the polymerization vessel was cooled to complete the polymerization. Then, the polymerization vessel was purged of the remaining monomer gas to atmospheric pressure, the resulting slurry was put in a container having an internal capacity of 2 L, water in the same volume as the slurry was added, and the polymer was separated from the polymerization medium and the remaining monomers with heating (20 to 73°C). The obtained polymer was dried in an oven at 120°C to obtain white powdery fluorinated copolymer-1.

The fluorinated copolymer-1 had a hydroxy group, a volume flow rate at 220°C of 14 $mm^3$/sec, a composition of TFE units/ethylene units/HFP units/$CH_2=CH(CF_2)_4F$ units/itaconic anhydride units=49.1/41.6/7.8/1.0/0.45 (mol%), and a melting point of 191°C.

[Ex. 1 to 24]

The above materials were mixed in a proportion as identified in Tables 2 to 4, supplied to the base end of the screws of a twin screw melt-kneading machine (manufactured by Toshiba Machine Co., Ltd., model: TEM-48SS) and melt-kneaded under the following conditions, and strands of the melt-kneaded product extruded from the tip of the die were cooled in a water bath and cut by a pelletizer to obtain pellets.

Screw diameter: 15 mm, L/D: 48, rotation direction: coaxial, screw pattern: three kneading portions, screen mesh: 100/100 mesh, screw speed: 200 rpm, cylinder: having first block C1, second block C2, third block C3, fourth block C4, fifth block C5, sixth block C6, seventh block C7 and eighth block C8 from base end side, temperature pattern: (set temperatures of the respective cylinder blocks C1 to C8, die (D), head (H)): C1=180°C, C2=210°C, C3=220°C,

C4=220°C, C5=230°C, C6=230°C, C7=240°C, C8=240°C, H=240°C, D=240°C.

Of the obtained pellets, the dispersed particle size, strain hardening degree, three-point bending test, hydrogen gas permeability coefficient, water absorption, free volume, and high-pressure hydrogen gas exposure test (hydrogen exposure degradation index, formation of blister) were evaluated. The results are shown in Tables 2 to 4.

[Table 2]

| | | Ex. 1 | Ex. 2 | Ex. 3 | Ex. 4 | Ex. 5 | Ex. 6 |
|---|---|---|---|---|---|---|---|
| Blend ratio (wt%) | Fluorinated copolymer-1 | 100 | - | - | - | - | - |
| | Fluorinated copolymer-2 | - | 100 | - | - | - | - |
| | EVOH-1 | - | - | 100 | - | - | - |
| | Polyamide-1 | - | - | - | 100 | - | - |
| | Polyamide-2 | - | - | - | - | 100 | - |
| | MAH-modified LDPE | - | - | - | - | | 100 |
| Dispersed particle size (μm) | | | - | - | - | - | - |
| Strain hardening degree | | Linear | Linear | Linear | Linear | Linear | Linear |
| Three-point flexural test at -40°C | | ○ | ○ | × | × | × | ○ |
| Hydrogen gas permeability coefficient at 15°C (cc•20 μm/(m$^2$•24hs•atm)) | | 13000 | 12800 | 16 | 824 | 271 | >20,000 |
| Water absorption (%) | | 0.07 | 0.07 | 2.82 | 3.51 | 1.82 | - |
| Free volume (nm$^3$) | | 0.163 | 0.165 | 0.0388 | 0.0625 | 0.0542 | - |
| High pressure hydrogen gas exposure test | Hydrogen gas degradation index | 0.919 | 0.92 | 0.0296 | 0.175 | 0.13 | >0.9 |
| | Blister | Occurred | Occurred | Occurred | Occurred | Occurred | Occurred |

[Table 3]

| | | Ex. 7 | Ex. 8 | Ex. 9 | Ex. 10 | Ex. 11 | Ex. 12 |
|---|---|---|---|---|---|---|---|
| Blend ratio (wt%) | Fluorinated copolymer-1 | 20 | 30 | 40 | 20 | - | 20 |
| | Fluorinated copolymer-2 | - | - | - | - | 20 | - |
| | EVOH-1 | 80 | 70 | 60 | - | - | - |
| | Polyamide-1 | - | - | - | 80 | 80 | - |
| | Polyamide-2 | - | - | - | - | - | 80 |
| | MAH-modified LDPE | - | - | - | - | - | - |
| Dispersed particle size (μm) | | 2.98 | 2.7 | 2.74 | 2.15 | 4.86 | 2.21 |
| Strain hardening degree | | 0.32 | 0.51 | 0.74 | 0.32 | Linear | 0.28 |
| Three-point flexural test at -40°C | | ○ | ○ | ○ | ○ | × | ○ |
| Hydrogen gas permeability coefficient at 15°C (cc•20 μm/(m$^2$•24hs•atm)) | | 25 | 33 | 38 | 1180 | 2529 | 958 |

(continued)

| | | Ex. 7 | Ex. 8 | Ex. 9 | Ex. 10 | Ex. 11 | Ex. 12 |
|---|---|---|---|---|---|---|---|
| Water absorption (%) | | 2 | 1.87 | 1.75 | 2.42 | 3.12 | 2.31 |
| Free volume ($nm^3$) | | 0.0465 | 0.0505 | 0.054 | 0.082 | 0.087 | 0.065 |
| High pressure hydrogen gas exposure test | Hydrogen gas degradation index | <0.08 | <0.10 | <0.14 | <0.5 | 0.82 | <0.4 |
| | Blister | Nil | Nil | Nil | Nil | Occurred | Nil |

[Table 3] (continued)

| | | Ex. 13 | Ex. 14 | Ex. 15 | Ex. 16 | Ex. 17 | Ex. 18 |
|---|---|---|---|---|---|---|---|
| Blend ratio (wt%) | Fluorinated copolymer-1 | - | - | - | - | - | - |
| | Fluorinated copolymer-2 | 20 | 20 | 30 | 40 | - | - |
| | EVOH-1 | - | 80 | 70 | 60 | 80 | 60 |
| | Polyamide-1 | - | - | - | - | - | - |
| | Polyamide-2 | 80 | - | - | - | - | - |
| | MAH-modified LDPE | - | - | - | - | 20 | 40 |
| Dispersed particle size (μm) | | 5.12 | 5.34 | 6.22 | 6.89 | 3.15 | 2.94 |
| Strain hardening degree | | Linear | Linear | Linear | Linear | Linear | Linear |
| Three-point flexural test at -40°C | | × | × | × | × | ○ | ○ |
| Hydrogen gas permeability coefficient at 15°C (cc•20 μm/($m^2$•24hs•atm)) | | 2053 | 65 | 90 | 110 | 146 | 220 |
| Water absorption (%) | | 2.76 | 0.56 | 0.72 | 0.91 | 3.1 | 3.51 |
| Free volume ($nm^3$) | | 0.071 | 0.0528 | 0.0572 | 0.0644 | 0.075 | 0.099 |
| High pressure hydrogen gas exposure test | Hydrogen gas degradation index | 0.72 | 0.5 | 0.55 | 0.58 | 0.62 | 0.84 |
| | Blister | Occurred | Occurred | Occurred | Occurred | Occurred | Occurred |

[Table 4]

| | | Ex. 19 | Ex. 20 | Ex. 21 | Ex. 22 | Ex. 23 | Ex. 24 |
|---|---|---|---|---|---|---|---|
| Blend ratio (wt%) | Fluorinated copolymer-1 | 20 | - | 20 | 20 | 20 | - |
| | Fluorinated copolymer-2 | - | 20 | - | - | - | 20 |
| | EVOH-1 | 30 | 40 | 40 | 50 | 40 | 40 |
| | Polyamide-1 | 50 | 40 | 40 | 30 | - | - |
| | Polyamide-2 | - | - | - | - | 40 | 40 |
| | MAH-modified LDPE | - | - | - | - | - | - |

(continued)

| | | Ex. 19 | Ex. 20 | Ex. 21 | Ex. 22 | Ex. 23 | Ex. 24 |
|---|---|---|---|---|---|---|---|
| Dispersed particle size (μm) | | 2.45 | 5.31 | 2.56 | 2.86 | 2.86 | 5.65 |
| Strain hardening degree | | 0.82 | <0.1 | 0.68 | 0.56 | 0.56 | <0.1 |
| Three-point flexural test at -40°C | | ○ | × | ○ | ○ | ○ | × |
| Hydrogen gas permeability coefficient at 15°C (cc•20 μm/(m$^2$•24hs•atm)) | | 448 | 756 | 328 | 124 | 239 | 553 |
| Water absorption (%) | | 2.16 | 2.95 | 2.1 | 2.03 | 2.33 | 2.65 |
| Free volume (nm$^3$) | | 0.073 | 0.085 | 0.062 | 0.072 | 0.058 | 0.075 |
| High pressure hydrogen gas exposure test | Hydrogen gas degradation index | <0.5 | 0.81 | <0.3 | <0.3 | <0.3 | 0.74 |
| | Blister | Nil | Occurred | Nil | Nil | Nil | Occurred |

The pellets in Ex. 7 to 10, 12, 19 and 21 to 23 had a low hydrogen exposure degradation index and had no blister formed, in the high-pressure hydrogen gas exposure test, and were excellent in resistance to a high-pressure hydrogen gas. From the fact that the pellets have excellent resistance to a high-pressure hydrogen gas with a low molecular weight, it can be judged that they are also excellent in resistance to a high-pressure gas with a higher molecular weight. Further, such pellets had strain hardening degree and were excellent in melt-forming property. Further, the pellets showed ductile fracture (unbroken) in the three-point bending test and were excellent in mechanical strength.

Whereas the pellets in Ex. 1 to 6, which were formed of any one of the above materials alone, were inferior in the resistance to a high-pressure hydrogen gas and melt-forming property. Further, among them, the pellets in Ex. 1, 2 and 6, which were formed of the fluorinated copolymer-1, the fluorinated copolymer-2 or the MAH-modified LDPE alone, were inferior in gas barrier property, and the pellets in Ex. 3 to 5, which were formed of EVOH-1, the polyamide-1 or the polyamide-2 alone, were inferior in mechanical strength and low water absorption.

The pellets in Ex. 11, 13 to 16, 20 and 24, which were formed of the fluorinated copolymer-2 instead of the fluorinated copolymer-1, were inferior in resistance to a high-pressure hydrogen gas, melt-forming property and mechanical strength.

The pellets in Ex. 17 and 18, which were formed of the MAH-modified LDPE instead of the fluorinated copolymer-1, were inferior in resistance to a high-pressure hydrogen gas and melt-forming property.

The entire disclosure of Japanese Patent Application No. 2021-124230 filed on July 29, 2021, including specification, claims, summary and drawings is incorporated herein by reference in its entirety.

## Claims

**1.** A polymer alloy, having a fluorinated copolymer having a carbonyl group-containing group, having a melting point of 250°C or lower, and at least one thermoplastic polymer selected from the group consisting of a polyamide and an ethylene/vinyl alcohol copolymer, immiscible with the fluorinated copolymer and having a melting point of 250°C or lower, melt-kneaded,

wherein the proportion of the fluorinated copolymer to the total mass of the polymer alloy is from 10 to 40 mass%, and
particles of the fluorinated copolymer are dispersed in the thermoplastic polymer, and the average particle size of the fluorinated copolymer particles in the polymer alloy is from 0.001 to 10 μm.

**2.** The polymer alloy according to Claim 1, wherein the following strain hardening degree is from 0.10 to 1.50:
strain hardening degree: the uniaxial elongation viscosity is measured at a temperature of 240°C at a strain rate $\varepsilon^{\bullet}$ of 1.0 $s^{-1}$, and the strain hardening degree SH is obtained in accordance with the following formulae (1) to (3):

$$SH = d\ln\lambda_n(t)/d\varepsilon(t) \qquad (1)$$

$$\lambda_n(t)=\eta_E^+(t)/3\eta(t) \qquad (2)$$

$$\varepsilon(t)= \varepsilon^{\bullet}\bullet t \qquad (3)$$

wherein SH is the strain hardening degree, In is the natural logarithm, $\lambda_n(t)$ is the nonlinear parameter, $\eta_E^+(t)$ is the elongation viscosity in the nonlinear region, $\eta(t)$ is the linear elongation viscosity obtained by converting the absolute value of the complex viscosity obtained as a function of $\omega$ by dynamic shear viscoelasticity measurement at a temperature of 240°C at an angular frequency $\omega$ of from 0.1 to 100 (rad/s), into a function of time with $1=1/\omega$, $\varepsilon(t)$ is Hencky strain, and t is the elongation time.

**3.** The polymer alloy according to Claim 1 or 2, wherein the content of the carbonyl group-containing group is from 10 to 60,000 groups per $1\times10^6$ carbon atoms in the main chain of the fluorinated copolymer.

**4.** The polymer alloy according to any one of Claims 1 to 3, wherein the carbonyl group-containing group is a group selected from the group consisting of a group having a carbonyl group between carbon atoms of a hydrocarbon group, a carbonate group, a carboxy group, a haloformyl group, an alkoxycarbonyl group and an acid anhydride residue.

**5.** The polymer alloy according to any one of Claims 1 to 4, wherein the fluorinated copolymer further has a hydroxy group.

**6.** The polymer alloy according to any one of Claims 1 to 5, wherein the fluorinated copolymer has units a1 based on tetrafluoroethylene, units based on ethylene, and units a3 based on a monomer copolymerizable with ethylene and tetrafluoroethylene, having no carbonyl group-containing group,

at least part of the units a3 are units based on $CH_2=CX^1(CF_2)_nX^2$ wherein $X^1$ and $X^2$ are each independently a hydrogen atom or a fluorine atom, and n is an integer of from 2 to 8, and
the total molar amount of the units a1, the units a2 and the units a3 to the total molar amount of all units constituting the fluorinated copolymer is 90 mol% or more.

**7.** The polymer alloy according to Claim 6, wherein the carbonyl group-containing group is an acid anhydride residue, and the fluorinated copolymer has units a4 based on a non-fluorinated monomer having the acid anhydride residue.

**8.** The polymer alloy according to any one of Claims 1 to 7, wherein the fluorinated copolymer satisfies that it has a flexural modulus of 1,000 MPa or less, it is not broken in Izod impact test at -40°C, it has a brittle temperature of -80°C or lower, and it shows ductile fracture in three-point bending test at -40°C.

**9.** The polymer alloy according to any one of Claims 1 to 8, wherein the thermoplastic polymer has a hydrogen gas permeability coefficient of 1,000 [cc•20 $\mu$m/(m$^2$•24hs•atm)] or less, and the fluorinated copolymer has a hydrogen gas permeability coefficient of 5,000 [cc•20 $\mu$m/(m$^2$•24hs•atm)] or more.

**10.** The polymer alloy according to any one of Claims 1 to 9, wherein the ethylene/vinyl alcohol copolymer has a hydrogen gas permeability coefficient of 50 [cc•20 $\mu$m/(m$^2$•24hs•atm)] or less, and the polyamide has a hydrogen gas permeability coefficient of 1,000 [cc•20 $\mu$m/(m$^2$•24hs•atm)] or less.

**11.** The polymer alloy according to any one of Claims 1 to 10, which has a water absorption of 2.5% or lower.

**12.** The polymer alloy according to any one of Claims 1 to 11, which has a free volume of 0.1 nm$^3$ or less.

**13.** The polymer alloy according to any one of Claims 1 to 12, which has the following hydrogen exposure degradation index of 0.5 or less:
hydrogen exposure degradation index: the polymer alloy is formed into a test specimen with a thickness of 2 mm, and subjected to high-pressure hydrogen gas exposure test of exposing the test specimen to a high-pressure hydrogen gas of 90 MPa for 65 hours repeatedly three times, and the hydrogen exposure degradation index is obtained from the visible light transmission of the test specimen in the thickness direction before and after the high-pressure hydrogen gas exposure test, in accordance with the following formula (4):

hydrogen exposure degradation index=1-(transmission after high-pressure hydrogen gas exposure test/transmission before high-pressure hydrogen gas exposure test)

**14.** The polymer alloy according to any one of Claims 1 to 13, wherein the tensile break strength after the fluorinated copolymer is exposed to an atmospheric temperature of 170°C for 500 hours is 70% or higher to the tensile break strength before the exposure.

**15.** The polymer alloy according to any one of Claims 1 to 14, wherein the tensile elongation at break after the fluorinated copolymer is exposed to an atmospheric temperature of 170°C for 500 hours is 100% or higher to the tensile elongation at break before the exposure.

**16.** The polymer alloy according to any one of Claims 1 to 15, wherein the decomposition half-life temperature for 100,000 hours of the fluorinated copolymer is 135°C or higher.

**17.** A high-pressure gas hose, using the polymer alloy as defined in any one of Claims 1 to 16.

**18.** A high-pressure gas hose, having a fiber-reinforced resin layer containing the polymer alloy as defined in any one of Claims 1 to 16 and reinforced fibers.

**19.** A high-pressure gas storage container, using the polymer alloy as defined in any one of Claims 1 to 16.

**20.** A high-pressure gas storage container, having a fiber-reinforced resin layer containing the polymer alloy as defined in any one of Claims 1 to 16 and reinforced fibers.

Fig. 1

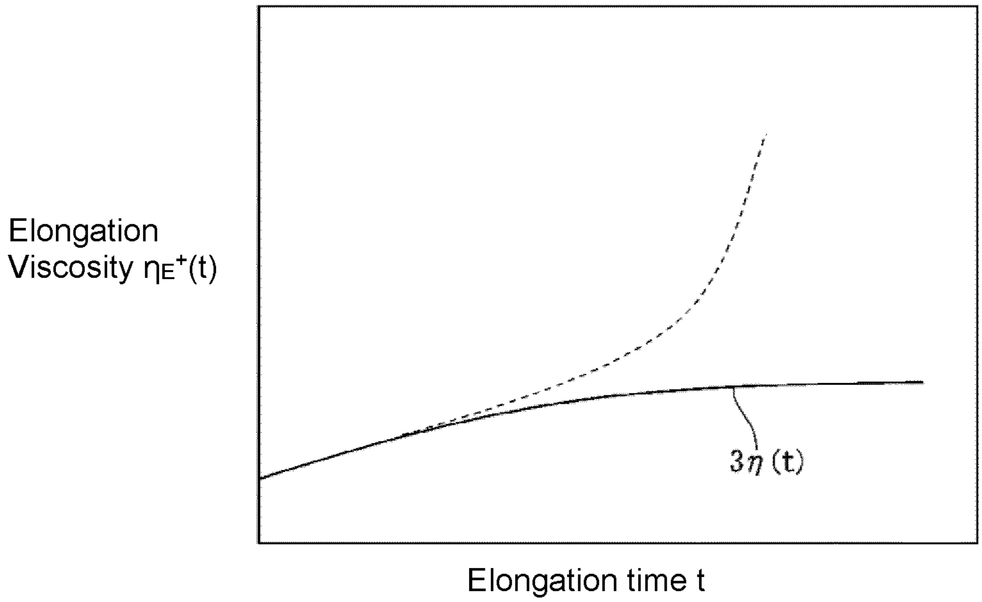
Elongation
Viscosity ηE+(t)
3η (t)
Elongation time t

Fig. 2

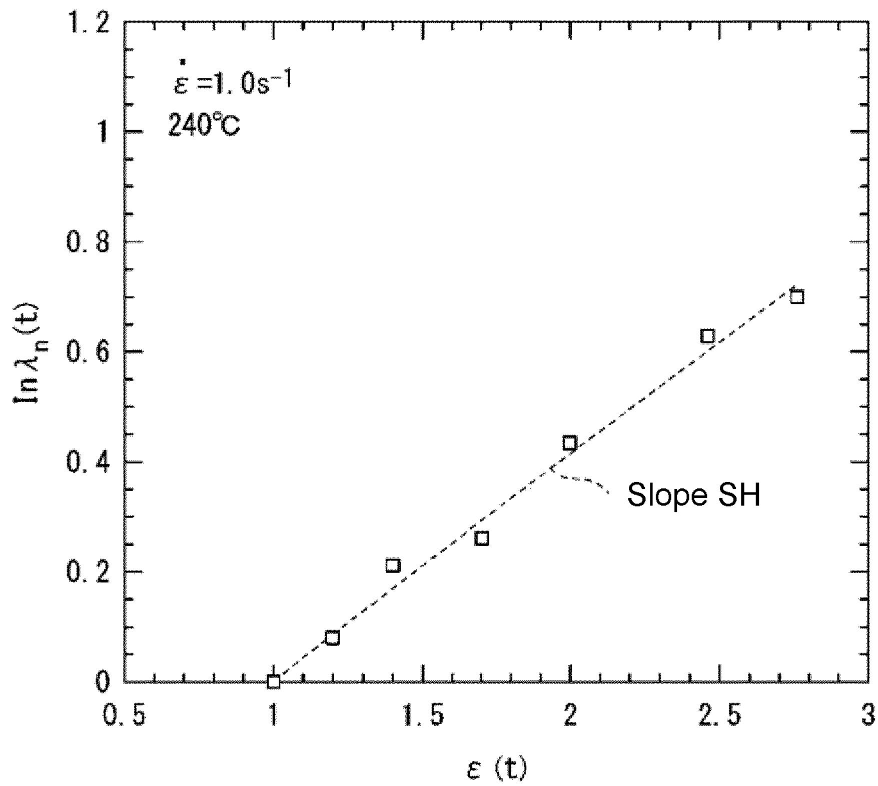
ε̇ =1.0s-1
240℃
Slope SH
lnλn(t)
ε (t)
1.2
1
0.8
0.6
0.4
0.2
0
0.5
1
1.5
2
2.5
3

## INTERNATIONAL SEARCH REPORT

International application No.
**PCT/JP2022/028812**

**A. CLASSIFICATION OF SUBJECT MATTER**

***C08L 29/04***(2006.01)i; ***C08F 214/18***(2006.01)i; ***C08J 5/04***(2006.01)i; ***C08L 27/12***(2006.01)i; ***C08L 77/00***(2006.01)i; ***F16J 12/00***(2006.01)i; ***F16L 11/04***(2006.01)i; ***F17C 1/16***(2006.01)i; ***F17C 13/00***(2006.01)i
FI: C08L29/04 C; C08F214/18; C08J5/04 CEX; C08J5/04 CFG; C08L27/12; C08L77/00; F16J12/00 C; F16L11/04; F17C1/16; F17C13/00 301Z

According to International Patent Classification (IPC) or to both national classification and IPC

**B. FIELDS SEARCHED**

Minimum documentation searched (classification system followed by classification symbols)

C08L1/00-101/16; C08F2/00-299/08; C08J3/00-7/18; F16J12/00; F16L11/00-11/26; F17C1/00-13/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2006-328195 A (DAIKIN IND LTD) 07 December 2006 (2006-12-07)<br>claims, paragraphs [0024], [0057], column "examples", etc. | 1-20 |
| X | WO 2014/021422 A1 (THE NIPPON SYNTHETIC CHEMICAL INDUSTRY CO., LTD.) 06 February 2014 (2014-02-06)<br>claims, paragraph [0093], column "examples", etc. | 1-20 |
| X | WO 2016/104726 A1 (THE NIPPON SYNTHETIC CHEMICAL INDUSTRY CO., LTD.) 30 June 2016 (2016-06-30)<br>claims, paragraph [0064], column "examples", etc. | 1-20 |
| A | WO 2017/082417 A1 (ASAHI GLASS COMPANY, LIMITED) 18 May 2017 (2017-05-18) | 1-20 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 September 2022** | **11 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**
**Information on patent family members**

International application No.
**PCT/JP2022/028812**

| Patent document cited in search report | Publication date (day/month/year) | Patent family member(s) | Publication date (day/month/year) |
|---|---|---|---|
| JP 2006-328195 A | 07 December 2006 | (Family: none) | |
| WO 2014/021422 A1 | 06 February 2014 | US 2015/0140247 A1<br>claims, paragraph [0122], column "examples", etc.<br>EP 2881639 A1<br>JP 2014-43100 A<br>JP 2014-58659 A | |
| WO 2016/104726 A1 | 30 June 2016 | US 2018/0016430 A1<br>claims, paragraph [0097], column "examples", etc.<br>EP 3239232 A1 | |
| WO 2017/082417 A1 | 18 May 2017 | US 2018/0237566 A1<br>EP 3375796 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007015279 A
- JP 2009019717 A
- JP 2006168358 A
- JP 2007218338 A
- JP 2005068300 A
- JP 2007314720 A
- WO 2015182702 A
- WO 2013129169 A
- JP 2021124230 A